# EUROPEAN PATENT APPLICATION

(11) **EP 1 333 603 A2**
(43) Date of publication of application: **06.08.2003**
(21) Application number: 03002311.3
(22) Date of filing: 03.02.2003
(51) Int. Cl.: H04B 10/207

(54) **Optical coaxial hybrid transmission system**

(30) Priority: 05.02.2002 JP 2002028265
(71) Applicant: MATSUSHITA ELECTRIC INDUSTRIAL CO., LTD., Kadoma-shi, Osaka 571-8501 (JP)
(72) Inventor: Masuda, Kouichi, Hirakata-shi, Osaka-fu 573-0071 (JP); Sasai, Hiroyuki, Katano-shi, Osaka-fu 576-0017 (JP)
(74) Representative: Gassner, Wolfgang, Dr.

(57) **Abstract**

An optical coaxial hybrid transmission system capable of quickly achieving high-speed Internet access at low cost without making any substantial changes to a transmission path of the existing system is provided. In this system, m-channel communications signals having frequencies of f1 to f*m* (Hz) corresponding to micro-cells (51) are converted into optical signals having different wavelengths by communications signal optical transmitters (102). These optical signals are wavelength-multiplexed by a communications signal wavelength multiplexer (103), and then wavelength-multiplexed by a video/communications signal wavelength multiplexer (104) with an optical signal modulated with a video signal. The resultant wavelength-multiplexed optical signal is transmitted to a node (30). In the node (30), the wavelength-multiplex optical signal is demultiplexed, and the video signal and the communications signals are frequency-multiplexed for transmission to the corresponding micro-cells (51).

## Description

### BACKGROUND OF THE INVENTION

### Field of the Invention

The present invention relates to CATV systems using an optical fiber and a coaxial cable and, more specifically, to a CATV system for quickly providing high-speed cable Internet access at low cost.

### Description of the Background Art

In recent years, the overwhelming prevalence of the Internet and email has rapidly increased the amount of data to be exchanged. This has raised expectations of broadband access (high-speed Internet access). One option for achieving such broadband access is Internet access using a CATV system.

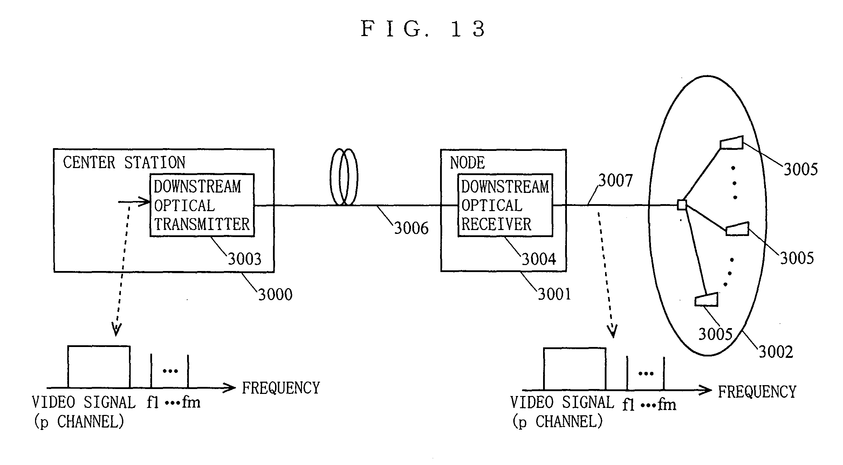

FIG. 13 is an illustration showing the configuration of a conventional optical coaxial hybrid transmission system (HFC: Hybrid Fiber Coaxial) for Internet access using a CATV system. Note that FIG. 13 illustrates only a downstream signal transmission system and does not illustrate an upstream signal transmission system. The upstream signal transmission system may share a coaxial transmission path of the downstream system, and also may share an optical fiber of the downstream system or use another optical fiber. FIG. 13 also illustrates signal frequency spectra observed at portions required for descriptions of the present embodiment.

In FIG. 13, the optical coaxial hybrid transmission system includes a center station 3000, a node 3001, and a cell 3002. The center station 3000 and the node 3001 are connected to each other by an optical fiber 3006. The node 3001 and the cell 3002 are connected to each other by a coaxial cable 3007.

The center station 3000 includes a downstream optical transmitter 3003. The node 3001 includes a downstream optical receiver 3004. The cell 3002 includes a plurality of subscriber terminals 3005. As illustrated in FIG. 13, the downstream optical transmitter 3003 is supplied with frequency-multiplexed *p*-channel video signals and *m*-channel communications signals having frequencies of f1 to f*m*. The communications signals include data obtained through the Internet. The downstream optical transmitter 3003 outputs an optical signal modulated with the frequency-multiplexed electrical signals. The optical signal output from the downstream optical transmitter 3003 is supplied via the optical fiber 3006 to the downstream optical receiver 3004.

The downstream optical receiver 3004 converts the received optical signal into an electrical signal, and outputs the electrical signal composed of the frequency-multiplexed *p*-channel video signals and the *m*-channel communications signals having frequencies of f1 to f*m*. The video and communications signals output from the downstream optical receiver 3004 are transmitted through the coaxial cable 3007 to each of the subscriber terminals 3005.

In the above-structured conventional optical coaxial hybrid transmission system, a single optical transmitting apparatus is used for transmitting the same video signal to approximately 1500 subscriber terminals 3005 in general. As for communications services, on the other hand, communications signals are frequency-multiplexed in a frequency band where no video signals are disposed, thereby readily achieving communications services to the subscriber terminals.

In the conventional optical coaxial hybrid transmission system, a limited frequency band is shared between a large number of subscribers. Therefore, as the number of subscribers increases, a connection speed per subscriber (communication speed) disadvantageously becomes decreased. To cope with the increase of the number of subscribers while keeping the connection speed, additional facilities are required, as described below.

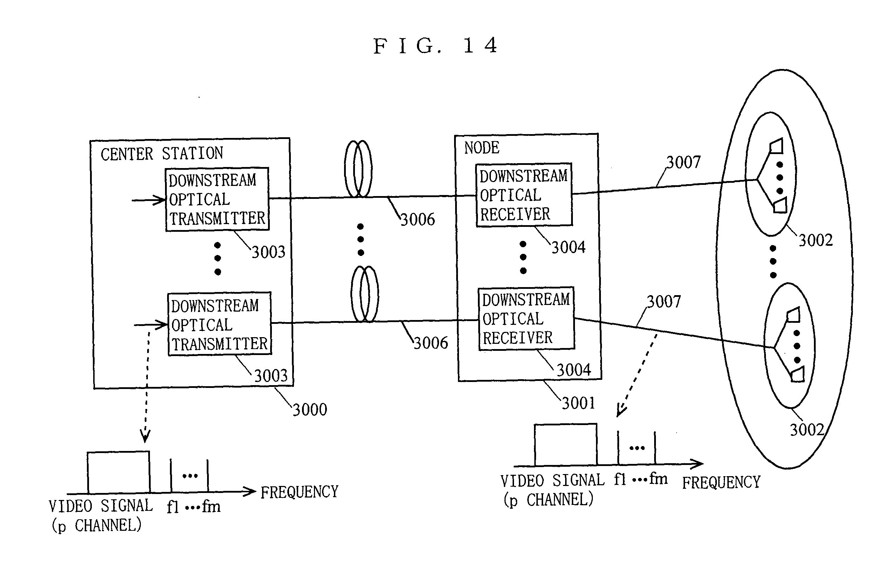

FIG. 14 is an illustration showing the configuration of a conventional optical coaxial hybrid transmission system when the number of subscribers is increased. As illustrated in FIG. 14, when the number of subscribers is increased, it is required that additional downstream optical transmitters 3003 be provided to the center station 3000 and that additional downstream optical receivers 3004 and optical fibers 3006 also be provided to the node 3001 so as to be in a one-to-one correspondence with these additional downstream optical transmitters 3003. That is, a plurality of optical coaxial hybrid transmission systems illustrated in FIG. 13 are required. As such, in the conventional optical coaxial hybrid transmission system, the number of subscribers per cell 3002 is restricted so as to prevent the connection speed from being decreased.

However, in order to provide a plurality of optical coaxial hybrid transmission systems as illustrated in FIG. 14, a large amount of time and cost is disadvantageously required.

### SUMMARY OF THE INVENTION

Therefore, an object of the present invention is to provide an optical coaxial hybrid transmission system capable of quickly achieving high-speed cable Internet access at low cost without making any substantial changes to a transmission path of the existing system by effectively using the exiting optical fiber network.

The present invention has the following features to attain the object mentioned above.

A first aspect of the present invention is directed to an optical coaxial hybrid transmission system including a center station, a node connected to the center station via an optical fiber, and a plurality of groups of subscriber terminals connected to the node via coaxial cables, wherein a first transmission signal including information common to all of the subscriber terminals and second transmission signals each including information unique to each of the subscriber terminals are transmitted from the center station to all of the subscriber terminals for each of micro-cells indicative of each of the plurality of groups of subscriber terminals, wherein the node distributes a signal transmitted from the center station to each of the subscriber terminals included in each of the micro-cells, wherein
the center station includes:
a first electrical-optical converter for converting the first transmission signal into an optical signal as a first optical signal;
a plurality of second electrical-optical converters for multiplexing, for each of the micro-cells, the second transmission signals to be transmitted to the subscriber terminals to generate multiplexed electrical signals, and converting the multiplexed electrical signals into optical signals having different wavelengths corresponding to the micro-cells;
a first wavelength multiplexer for wavelength-multiplexing the optical signals obtained by the plurality of second electrical-optical converters, and producing an output as a second optical signal; and
a second wavelength multiplexer for wavelength-multiplexing the first optical signal and the second optical signal to generate an optical signal, and transmitting the optical signal via the optical fiber,
the node includes:
a first wavelength demultiplexer for wavelength-demultiplexing the optical signal transmitted from the second wavelength multiplexer via the optical fiber into the first optical signal and the second optical signal;
a first optical-electrical converter for converting the first optical signal obtained through demultiplexing by the first wavelength demultiplexer into the first transmission signal;
a second wavelength demultiplexer for wavelength-demultiplexing the second optical signal obtained through demultiplexing by the first wavelength demultiplexer into a plurality of optical signals;
a plurality of second optical-electrical converters for converting the plurality of optical signals obtained through demultiplexing by the second wavelength demultiplexer into electrical signals, and outputting the electrical signals as micro-cell-bound electrical signals; and
a plurality of frequency multiplexers, each provided for each of the second optical-electrical converters, for frequency-multiplexing the first transmission signal converted by the first optical-electrical converter and the micro-cell-bound electrical signal output from a corresponding one of the second optical-electrical converters to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the frequency multiplexers via the corresponding one of the coaxial cables, and further extracts the second transmission signal multiplexed on the micro-cell-bound electrical signal.

According to the first aspect, the center station converts the first transmission signal (video signal, for example) common to the subscriber terminals and the second transmission signals (communications signals, for example) for the micro-cells into optical signals having different wavelengths, and then wavelength-multiplexes these optical signals for transmission. The node frequency-multiplexes the first transmission signals and the second transmission signals to groups of subscriber terminals, and transmits the frequency-multiplexed signal for each of the micro-cells. With this, it is possible to provide an optical coaxial hybrid transmission system capable of quickly coping with high-speed Internet access and an increase in the number of subscribers at low cost by effectively using the existing system, such as an optical fiber cable or a coaxial cable.

A second aspect of the present invention is directed to an optical coaxial hybrid transmission system including a center station, a node connected to the center station via an optical fiber, and a plurality of groups of subscriber terminals connected to the node via coaxial cables, wherein a first transmission signal including information common to all of the subscriber terminals and second transmission signals each including information unique to each of the subscriber terminals are transmitted from the center station to all of the subscriber terminals for each of micro-cells indicative of each of the plurality of groups of subscriber terminals, wherein the node distributes a signal transmitted from the center station to each of the subscriber terminals included in each of the micro-cells, wherein
the center station includes:
a first electrical-optical converter for converting the first transmission signal into an optical signal as a first optical signal;
a first frequency multiplexer for frequency-multiplexing a plurality of block signals corresponding to the micro-cells, the block signals being obtained by multiplexing, for each of the micro-cells, the second transmission signals to be transmitted to the subscriber terminals;
a second electrical-optical converter for converting the block signals frequency-multiplexed by the first frequency multiplexer into an optical signal, and outputting the optical signal as a second optical signal; and
a wavelength multiplexer for wavelength-multiplexing the first optical signal and the second optical signal to generate an optical signal for transmission via the optical fiber,
the node includes:
a wavelength demultiplexer for demultiplexing the optical signal transmitted from the wavelength multiplexer via the optical fiber into the first optical signal and the second optical signal;
a first optical-electrical converter for converting the first optical signal obtained by the wavelength demultiplexer into the first transmission signal;
a second optical-electrical converter for converting the second optical signal obtained by the wavelength demultiplexer into an electrical signal;
a frequency demultiplexer for frequency-demultiplexing the electrical signal obtained by the second optical-electrical converter into the plurality of block signals;
a plurality of frequency converters each for frequency-converting a frequency of a corresponding one of the block signals obtained by the frequency demultiplexer into a frequency band receivable by a corresponding one of the groups of subscriber terminals included in a corresponding one of the micro-cells, and producing an output as a micro-cell-bound electrical signal; and
a plurality of second frequency multiplexers, each provided for each of the frequency converters, for frequency-multiplexing the first transmission signal obtained by the first optical-electrical converter and the micro-cell-bound electrical signal output from a corresponding one of the frequency converters to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the second frequency multiplexers via the corresponding one of the coaxial cables, and further extracts the second transmission signal multiplexed on the micro-cell-bound electrical signal.

According to the second aspect, the center station converts the second transmission signals for the micro-cells into block signals having different frequencies for frequency multiplexing. Furthermore, the center station wavelength-multiplexes the second optical signal modulated with the frequency-modulated block signal and the first optical signal modulated with the first transmission signal for transmission. The node frequency-multiplexes the first transmission signal and the second transmission signals for the subscriber terminals, and transmits the frequency-multiplexed signal for each of the micro-cells. With this, it is possible to provide an optical coaxial hybrid transmission system capable of quickly coping with high-speed Internet access and an increase in the number of subscribers at low cost by effectively using the existing system.

A third aspect of the present invention is directed to an optical coaxial hybrid transmission system including a center station, a node connected to the center station via an optical fiber, and a plurality of groups of subscriber terminals connected to the node via coaxial cables, wherein a first transmission signal including information common to all of the subscriber terminals and second transmission signals each including information unique to each of the subscriber terminals are transmitted from the center station to all of the subscriber terminals for each of group cells which includes micro-cells indicative of each of the plurality of groups of subscriber terminals, wherein the node distributes a signal transmitted from the center station to each of the subscriber terminals included in each of the micro-cells, wherein
the center station includes:
a first electrical-optical converter for converting the first transmission signal into an optical signal as a first optical signal;
a plurality of second electrical-optical converters for converting the group signals into a plurality of optical signals having different wavelengths corresponding to a plurality of group cells, wherein the second transmission signals are the group signals obtained correspondingly to the respective group cells for each of the group cells by frequency-multiplexing block signals obtained by multiplexing signals for each of the micro-cells;
a first wavelength multiplexer for wavelength-multiplexing the optical signals obtained by the second electrical-optical converters, and producing an output as a second optical signal; and
a second wavelength multiplexer for wavelength-multiplexing the first optical signal and the second optical signal to generate an optical signal, and transmitting the optical signal via the optical fiber,
the node includes:
a first wavelength demultiplexer for demultiplexing the optical signal transmitted from the second wavelength multiplexer via the optical fiber into the first optical signal and the second optical signal;
a first optical-electrical converter for converting the first optical signal obtained by the first wavelength demultiplexer into the first transmission signal;
a second wavelength demultiplexer for wavelength-demultiplexing the second optical signal obtained by the first wavelength demultiplexer into a plurality of optical signals corresponding to the group cells;
a second optical-electrical converter for converting the plurality of optical signals obtained by the second wavelength demultiplexer into the group signals;
a plurality of frequency demultiplexers, each provided for each of the second optical-electrical converters, for frequency-demultiplexing the group signals obtained by the second optical-electrical converter into the block signals;
a plurality of frequency converters, each provided for each of the frequency demultiplexers, for frequency-converting a frequency of one of the block signals obtained by a corresponding one of the frequency demultiplexers into a frequency band receivable by a corresponding one of the subscriber terminals included in a corresponding one of the micro-cells, and producing an output as a micro-cell-bound electrical signal; and
a plurality of frequency multiplexers, each provided for each of the frequency converters, for frequency-multiplexing the first transmission signal obtained by the first optical-electrical converter and the micro-cell-bound electrical signal output from the corresponding frequency converter to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the second frequency multiplexers via the corresponding one of the coaxial cables, and further extracts the second transmission signal multiplexed on the micro-cell-bound electrical signal.

According to the third aspect, the center station frequency-multiplexes block signals for the micro-cells to generate group signals for group cells. Furthermore, the center station converts the group signals for the group cells into optical signals having different wavelengths for wavelength multiplexing. Still further, the center station wavelength-multiplexes these optical signals with an optical signal modulated by the first transmission signal for transmission. The node frequency-multiplexes the first transmission signal and the second transmission signals for groups of subscriber terminals, and transmits the frequency-multiplexed signal for each of the micro-cells. With this, it is possible to provide an optical coaxial hybrid transmission system capable of quickly coping with high-speed Internet access and an increase in the number of subscribers at low cost by effectively using the existing system.

A fourth aspect of the present invention is directed to an optical coaxial hybrid transmission system including a center station, a node connected to the center station via first and second optical fibers, and a plurality of groups of subscriber terminals connected to the node via coaxial cables, wherein a first transmission signal including information common to all of the subscriber terminals and second transmission signals each including information unique to each of the subscriber terminals are transmitted from the center station to all of the subscriber terminals for each of micro-cells indicative of each of the plurality of groups of subscriber terminals, wherein the node distributes a signal transmitted from the center station to each of the subscriber terminals included in each of the micro-cells, wherein
the center station includes:
a first electrical-optical converter for converting the first transmission signal into an optical signal, and transmitting the optical signal as a first optical signal via the first optical fiber;
a plurality of second electrical-optical converters for multiplexing, for each of the micro-cells, the second transmission signals transmitted to the subscriber terminals to generate multiplexed electrical signals, and converting the multiplexed electrical signals into optical signals having different wavelengths corresponding to the micro-cells; and
a wavelength multiplexer for wavelength-multiplexing the optical signals obtained by the plurality of second electrical-optical converters, and producing an output as a second optical signal via the second optical fiber,
the node includes:
a first optical-electrical converter for converting the first optical signal transmitted from the first electrical-optical converter via the first optical fiber into the first transmission signal;
a wavelength demultiplexer for wavelength-demultiplexing the second optical signal transmitted from the wavelength multiplexer via the second optical fiber into a plurality of optical signals;
a plurality of second optical-electrical converters for converting the optical signals obtained by the wavelength-demultiplexer into electrical signals, and outputting the electrical signals as micro-cell-bound electrical signals; and
a plurality of frequency multiplexer, each provided for each of the plurality of the second optical-electrical converters, for frequency-multiplexing the first transmission signal obtained by the first optical-electrical converter and the micro-cell-bound electrical signal output from a corresponding one of the second optical-electrical converters to generate a frequency-multiplexed electrical signal, and transmitting the frequency-multiplexed electrical signal to the subscriber terminals included in a corresponding one of the micro-cells via a corresponding one of the coaxial cables, wherein
   each of the subscriber terminal receives the first transmission signal and the micro-cell-bound electrical signal multiplexed on the electrical signal transmitted from a corresponding one of the frequency multiplexers via the corresponding one of the coaxial cables, and further extracts the second transmission signal multiplexed on the micro-cell-bound electrical signal.

According to the fourth aspect, the center station wavelength-multiplexes optical signals having different wavelengths modulated with the second transmission signals for the micro-cells for transmission. The node frequency-multiplexes the first transmission signal and the second transmission signals for groups of subscriber terminals, and transmits the frequency-multiplexed signal for each of the micro-cells. With this, it is possible to provide an optical coaxial hybrid transmission system capable of quickly coping with high-speed Internet access and an increase in the number of subscribers at low cost by effectively using the existing system. Also, the optical signal modulated with the first transmission signal and the optical signal modulated with the second transmission signal are not wavelength-multiplexed, but are transmitted via different optical fibers. Therefore, when the existing system is upgraded, the system design for the video signal does not have to be changed.

A fifth aspect of the present invention is directed to an optical coaxial hybrid transmission system including a center station, a node connected to the center station via an optical fiber, and a plurality of groups of subscriber terminals connected to the node via coaxial cables, wherein a transmission signal including information unique to each of the subscriber terminals is transmitted to the center station via the node for each of micro-cells indicative of each of the plurality of groups of subscriber terminals, wherein
each of the subscriber terminals includes
a transmission signal output unit for transmitting the transmission signal including the information unique to the subscriber terminal via a corresponding one'of the coaxial cables,
the node includes:
a plurality of electric-optical converters, each provided for each of the micro-cells, for receiving, for each of the micro-cells, the transmission signal transmitted from a corresponding one of the subscriber terminals via the corresponding one of the coaxial cables, and converting a plurality of said transmission signals into optical signals having different wavelengths corresponding to the micro-cells; and
a wavelength multiplexer for wavelength-multiplexing the optical signals obtained by the electrical-optical converters to generate an optical signal, and transmitting the optical signal via the optical fiber, and
the center station includes:
a wavelength demultiplexer for wavelength-demultiplexing the optical signal transmitted via the optical fiber into optical signals; and
a plurality of optical-electrical converters for converting the optical signals obtained by the wavelength demultiplexer into electrical signals.

According to the fifth aspect, the node wavelength-multiplexes the optical signals each modulated with a transmission signal for each of the micro-cells. With this, it is possible to provide an optical coaxial hybrid transmission system capable of quickly coping with high-speed Internet access and an increase in the number of subscribers at low cost by effectively using the existing system.

A sixth aspect of the present invention is directed to an optical coaxial hybrid transmission system including a center station, a node connected to the center station via an optical fiber, and a plurality of groups of subscriber terminals connected to the node via coaxial cables, wherein a transmission signal including information unique to each of the subscriber terminals is transmitted to the center station via the node for each of micro-cells indicative of each of the plurality of groups of subscriber terminals, wherein
each of the subscriber terminals includes
a transmission signal output unit for transmitting the transmission signal including the information unique to the subscriber terminal via a corresponding one of the coaxial cables,
the node includes:
a plurality of first frequency converters, each provided correspondingly to the micro-cells, for receiving, for each of the micro-cells, the transmission signal transmitted from a corresponding one of the subscriber terminals via the corresponding one of the coaxial cables, and further converting a plurality of said transmission signals received for each of the micro-cells into block signals having different frequency bands corresponding to the micro-cells;
a frequency multiplexer for frequency-multiplexing the block signals obtained by the first frequency converters to generate an electrical signal; and
an electrical-optical converter for converting the electrical signal obtained by the frequency multiplexer into an optical signal, and transmitting the optical signal to the optical fiber, and
the center station includes:
an optical-electrical converter for converting the optical signal transmitted via the optical fiber into an electrical signal;
a frequency demultiplexer for frequency-demultiplexing the electrical signal obtained by the optical-electrical converter into the block signals; and
a plurality of second frequency converters for converting frequency bands of the block signals obtained by the frequency demultiplexer into frequency bands of the transmission signals transmitted from the subscriber terminals. According to the sixth aspect, the node converts the transmission signals for the micro-cells into signals having different frequency bands for frequency multiplexing, and then outputs an optical signal modulated with a frequency-multiplexed electrical signal. With this, it is possible to provide an optical coaxial hybrid transmission system capable of quickly coping with high-speed Internet access and an increase in the number of subscribers at low cost by effectively using the existing system.

A seventh aspect of the present invention is directed to an optical coaxial hybrid transmission system including a center station, a node connected to the center station via an optical fiber, and a plurality of groups of subscriber terminals connected to the node via coaxial cables, wherein a transmission signal including information unique to each of the subscriber terminals is transmitted to the center station via the node for each of group cells each including micro-cells indicative of each of the plurality of groups of subscriber terminals, wherein
each of the subscriber terminals includes
a transmission signal output unit for transmitting the transmission signal including the information unique to the subscriber terminal via a corresponding one of the coaxial cables,
the node includes:
a plurality of first frequency converters, each provided correspondingly to each of the micro-cells, for receiving, for each of the micro-cells, the transmission signal transmitted from a corresponding one of the subscriber terminals via the corresponding one of the coaxial cables, and further converting a plurality of said transmission signals received for each of the micro-cells into block signals having different frequency bands corresponding to the micro-cells;
a plurality of frequency multiplexers, each provided correspondingly to each of the group cells, for frequency-multiplexing, for each of the group cells, the block signals obtained by the first frequency converters, and producing an output as a group signal;
a plurality of electrical-optical converters, each provided correspondingly to each of the frequency multiplexers, for converting a plurality of said group signals obtained by the frequency multiplexers into optical signals having wavelengths different from each other corresponding to the micro-cells; and
a wavelength multiplexer for wavelength-multiplexing the optical signals obtained by the plurality of the electrical-optical converters to generate an optical signal, and transmitting the optical signal via the optical fiber, and
the center station includes:
a wavelength demultiplexer for demultiplexing the optical signals transmitted via the optical fiber;
a plurality of optical-electrical converters, each provided correspondingly to each of the optical-electrical converters, for converting the group signal obtained by a corresponding one of the optical-electrical converter into the block signals; and
a plurality of second frequency converters, each provided correspondingly to each of the micro-cells, for converting a frequency band of the block signal obtained by a corresponding one of the frequency demultiplexers into a frequency band of the transmission signal transmitted from a corresponding one of the subscriber terminals.

According to the seventh aspect, the node frequency-converts the transmission signals for micro-cells, then frequency-multiplexes those frequency-converted signals for each of the group cells to generate optical signals having different wavelengths, and wavelength-multiplexes these optical signals for transmission. With this, it is possible to provide an optical coaxial hybrid transmission system capable of quickly coping with high-speed Internet access and an increase in the number of subscribers at low cost by effectively using the existing system.

According to an eighth aspect based on the sixth or seventh aspect, each of the first frequency converters includes:
a local oscillation signal generator for outputting a local oscillation signal;
a mixer for mixing the local oscillation signal and a signal obtained by receiving the transmission signal outputted from each of the subscriber terminals for each of the micro cells; and
a band-pass filter for passing a signal of a predetermined frequency and a signal of a frequency band of the local oscillation signal from out of signals outputted from the mixer.

According to the eighth aspect, the local oscillation signal output from the local oscillation signal generator is always supplied to the electrical-optical converter. With this, even when no transmission signal is output from the groups of subscriber terminals, an optical signal modulated with the local oscillation signal is transmitted. Thus, compared with a case where the optical transmitter is unmodulated, an optical spectrum is widened, and SBS (Stimulated Brillouin Scattering) in the fiber can be suppressed.

According to a ninth aspect based on the sixth or seventh aspect, the node further includes a local oscillation signal generator for generating a local oscillation signal,each of the first frequency converters includes:
a third frequency converter converting the local oscillation signal output from the local oscillation signal generator;
a mixer for mixing a signal output from the third frequency converter and a signal obtained by receiving at least one transmission signal transmitted from the subscriber terminals for each micro-cell; and
a band-pass filter for passing a signal having a predetermined frequency band from out of signals output from the mixer, and
the frequency multiplexer frequency-multiplexes the local oscillation signal output from the local oscillation signal generator and a signal output from the band-pass filter.

According to the ninth aspect, the electrical-optical converter is always supplied with the local oscillation signal from the local oscillation signal generator. Therefore, an optical signal modulated with the local oscillation signal always enters the optical fiber irrespectively of the presence or absence of a transmission signal. With this, compared with a case where the optical transmitter is unmodulated, an optical spectrum is widened, and influences of SBS occurring in the fiber can be avoided.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an illustration showing the configuration of an optical coaxial hybrid transmission system according to a first embodiment of the present invention;
FIG. 2 is an illustration showing the configuration of an optical coaxial hybrid transmission system according to a second embodiment of the present invention;
FIG. 3 is a block diagram illustrating an example of the structure of a communications signal frequency demultiplexer 314;
FIG. 4 is a block diagram illustrating an example of the structure of a frequency converter 315;
FIG. 5 is an illustration showing the configuration of an optical coaxial hybrid transmission system according to a third embodiment of the present invention;
FIG. 6 is an illustration showing the configuration of an optical coaxial hybrid transmission system according to a fourth embodiment of the present invention;
FIG. 7 is an illustration showing the configuration of an optical coaxial hybrid transmission system according to a fifth embodiment of the present invention;
FIG. 8 is an illustration showing the configuration of an optical coaxial hybrid transmission system according to a sixth embodiment of the present invention;
FIG. 9 is an illustration showing an example of the structure of a frequency up-converter 361;
FIG. 10 is an illustration showing another example of the structure of the frequency up-converter 361;
FIG. 11 is an illustration showing the structure of a node in an optical coaxial hybrid transmission system when a common local oscillation signal is generated;
FIG. 12 is an illustration showing the configuration of an optical coaxial hybrid transmission system according to a seventh embodiment of the present invention;
FIG. 13 is an illustration showing the configuration of a conventional optical coaxial transmission system in Internet access using a CATV system; and
FIG. 14 is an illustration showing the configuration of a conventional optical coaxial transmission system when the number of subscribers is increased.

### DESCRIPTION OF THE PREFERRED EMBODIMENTS

### (First Embodiment)

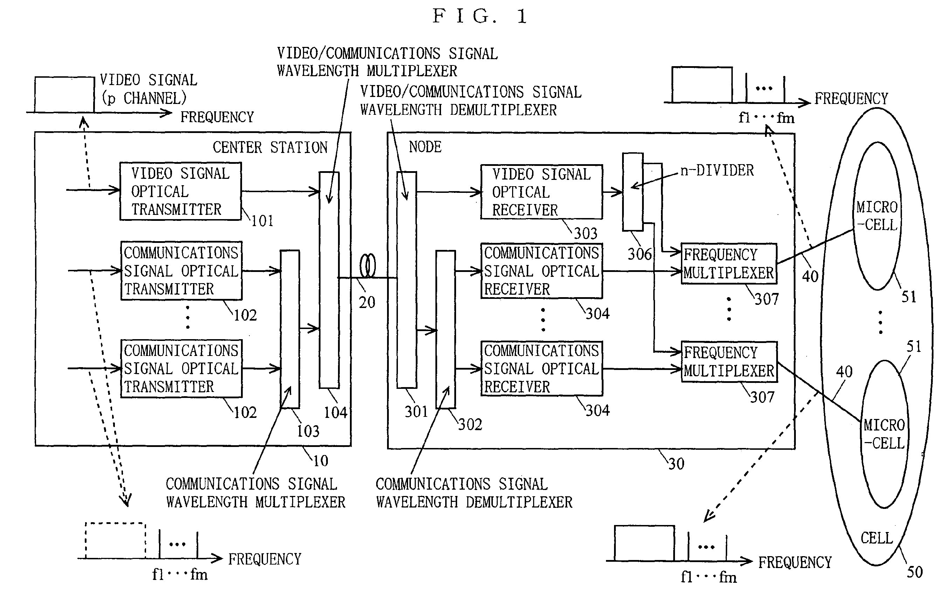

FIG. 1 is an illustration of the configuration of an optical coaxial hybrid transmission system according to a first embodiment of the present invention. FIG. 1 also illustrates frequency spectra of transmission signals observed at portions required for descriptions of the present embodiment. In FIG. 1, only a downstream system is illustrated, and an upstream system is omitted.

In FIG. 1, the optical coaxial hybrid transmission system includes a center station 10, an optical fiber 20, a node 30, and a cell 50. The cell 50 is a collection of subscriber terminals (not shown) for receiving video signals and communications signals transmitted from the node 30. The cell 50 is divided into n micro-cells 51. Therefore, each micro-cell 50 is a collection of subscriber terminals (such a collection is hereinafter referred to as subscriber terminal group). The number of subscriber terminals contained in a single micro-cell 51 is determined so that each subscriber terminal can get an appropriate transmission speed. The fewer the number of subscriber terminals composing the micro-cell 51 is, the higher the transmission speed can be.

The center station 10 includes a video signal optical transmitter 101, *n* (*n* is an arbitrary natural number) communications signal optical transmitters 102, a communications signal wavelength multiplexer 103, and a video/communications signal wavelength multiplexer 104. The node 30 includes a video/communications signal wavelength demultiplexer 301, a communications signal wavelength demultiplexer 302, a video signal optical receiver 303, *n* communications signal optical receivers 304, an *n*-divider 306, and *n* frequency multiplexers 307.

The cell station 10 and the node 30 are connected to each other via the optical fiber 20. The micro-cells 51 are respectively connected to the frequency multiplexer 307 included in the node 30 via coaxial cables 40.

One end at the center station side of the optical fiber 20 is connected to the video/communications signal wavelength multiplexer 104. An input port of the video/communications signal wavelength multiplexer 104 is connected to the video signal optical transmitter 101 and the communications signal wavelength multiplexer 103. An input port of the communications signal wavelength multiplexer 103 is connected to the *n* communications signal optical transmitters 102.

The other end at the node side of the optical fiber 20 is connected to the video/communications signal wavelength demultiplexer 301. An output port of the video/communications signal wavelength demultiplexer 301 is connected to the video signal optical receiver 303 and the communications signal wavelength demultiplexer 302. An output side of the video signal optical receiver 303 is connected to the *n*-divider 306. An output port of the *n*-divider 306 is connected to the *n* frequency multiplexers 307. An output port of the communications signal wavelength demultiplexer 302 is connected to the *n* communications signal optical receivers 304. An output side of the communications signal optical receivers 304 is connected to the frequency multiplexers 307.

The micro-cells 51 are in a one-to-one correspondence with the frequency multiplexers 307, the communications signal optical receivers 304, and the communications signal optical transmitters 102. Wavelengths of optical signals output from the communications signal optical transmitters 102 differ from each other. Each wavelength is determined based on the corresponding micro-cell 51. The wavelengths are also different from a wavelength of an optical signal output from the video signal optical transmitter 101.

Here, consider a case where the center station 10 supplies each subscriber terminal with a (*p* + *m*)-channel signal composed of a *p*-channel video signal and an *m*-channel communications signal. In this case, a frequency band occupied by the (*p* + *m*)-channel signal includes a frequency band occupied by the *p*-channel video signal and a frequency band occupied by the *m*-channel communications signal. Here, the video signal is a signal associated with television broadcasts commonly transmitted to all subscriber terminals contained in the cell 50, such as redistributed ground-wave and satellite broadcasts, and independent broadcasts. The communications signal is a signal associated with data obtained by the center station 10 via the Internet, that is, a signal inclusive of information unique to each subscriber terminal. Each micro-cell 51 is allocated a frequency band of f1 to f*m* (Hz) for communications signals. The subscriber terminals contained in a single micro-cell 51 share the frequency band of f1 to f*m* (Hz) for receiving the communications signals.

The operation of the above-described optical coaxial hybrid transmission system when a downstream signal is transmitted is described below. The video signal optical transmitter 101 intensity-modulates an optical signal having a wavelength of λp with an input p-channel video signal for output to the video/communications signal wavelength multiplexer 104.

Each communications signal optical transmitter 102 intensity-modulates an optical signal with an input m-channel communications signal for output to the communications signal wavelength multiplexer 103. The communications signal wavelength multiplexer 103 wavelength-multiplexes optical signals output from the communications signal optical transmitters 102 for output to the video/communications signal wavelength multiplexer 104. The video/communications signal wavelength multiplexer 104 wavelength-multiplexes an optical signal output from the video signal optical transmitter 101 (which has been modulated with the video signal) with an optical signal output from the video signal optical transmitter 101 (which has been modulated with the communications signals) for output. An optical signal output from the video/communications signal wavelength multiplexer 104 is supplied to the video/communications signal wavelength demultiplexer 301.

The video/communications signal wavelength demultiplexer 301 demultiplexes the received optical signal into two optical signals: one is the optical signal modulated with the video signal, and the other is the optical signal obtained by modulating the optical signals output from the communications signal optical transmitters 102 with the communications signal and then wavelength-multiplexing these optical signals. The optical signal modulated with the video signal is supplied to the video signal optical receiver 303. The other optical signal is supplied to the communications signal wavelength demultiplexer 302.

The video signal optical receiver 303 converts the optical signal modulated with the video signal into an electrical signal for output to the *n*-divider 306. The *n*-divider 306 divides the electrical signal (video signal) into *n* signals for output to the respective frequency multiplexers 307.

The communications signal wavelength demultiplexer 302 wavelength-demultiplexes the optical signal obtained by modulation with the communications signal and then wavelength-multiplexes into optical signals for output to the communications signal optical receivers 304. These wavelength-demultiplexed optical signals correspond to the optical signals output from the communications signal optical transmitters 102. Each communications signal optical receiver 304 converts the received signal modulated with the communications signal into an electrical signal (communications signal) for output to each corresponding frequency multiplexer 307.

Each frequency multiplexer 307 frequency-multiplexes the *p*-channel video signal output from the *n*-divider 306 and the *m*-channel communications signal output from the corresponding communications signal optical receiver 304 for output as a (*p* + *m*)-channel signal. The (*p* + *m*)-channel signal output from the frequency multiplexer 307 is transmitted via the coaxial cable 40 to the corresponding micro-cell 51. Each subscriber terminal contained in the micro-cell 51 receives via the coaxial cable the video signal and communications signal multiplexed on the electrical signal transmitted from the corresponding frequency multiplexer 307, and then further extracts, from the communications signal, the transmission signal multiplexed thereon and transmitted to the subscriber terminal (a signal whose frequency is any one of f1 to f*m*).

As described above, in the optical coaxial hybrid transmission system according to the first embodiment, the center station 10 converts the video signal and the plurality of communications signals destined to the micro-cells 51 into optical signals of different wavelengths, and then wavelength-multiplexes these optical signals for output to the node 30. The node 30 frequency-multiplexes the video signal and the communications signals destined to the micro-cells 51 for output to each micro-cell 51. Therefore, it is possible to provide an optical coaxial hybrid transmission system capable of quickly coping with high-speed Internet access or an increase in the number of subscribers at low cost by effectively using the existing system (without increasing the number of optical fiber cables and the number of coaxial cables to the subscriber terminals).

Although not specifically mentioned in the above descriptions of the first embodiment, it is needless to say that an electrical amplifier is required at an appropriate place in the optical coaxial hybrid transmission system so as to compensate for division loss due to the process of dividing the electrical signals and transmission loss on the coaxial transmission path.

For the purpose of increasing the number of subscriber terminals, each added subscriber terminal is assigned a signal of a frequency band different from that of f1 to f*m* that have been used for the existing subscriber terminals (f*n*, for example). Furthermore, the center station side multiplexes the signals of f1 to fm and fn for generating communications signal.

For the purpose of increasing the number of communications signals in order to achieve high-speed Internet access and an increase in the number of subscribers, an optical signal having a different wavelength and corresponding to the added communications signal is further subjected to wavelength multiplexing.

In the first embodiment, a case has been described where an optical coaxial hybrid transmission is newly constructed. Alternatively, the optical coaxial hybrid transmission system according to the first embodiment can be constructed by expanding the existing optical transmission system with the use of a single optical fiber being used therein, thereby coping with high-speed Internet access and an increase in the number of subscribers. In other words, a method can be thought of such as a method of expanding the existing system into the optical coaxial hybrid transmission system according to the first embodiment.

In the first embodiment, the optical signal associated with the video signal and the optical signals associated with the communications signals are multiplexed by two wavelength multiplexers in two stages. Alternatively, these optical signals can be multiplexed by a single wavelength multiplexer in a single stage.

As a method of dividing the cell 50 into micro-cells, various schemes can be thought of. By way of example only, from among a plurality of subscriber terminals being connected in a tree form, those connected to one subscriber terminal serving as a branching point are grouped as a micro-cell. In another example, when a plurality of subscriber terminals are connected in a multidrop form, a coaxial cable connecting these subscriber terminals is separated at some point, and subscribers terminals located beyond the separating point are grouped as a micro-cell.

### (Second Embodiment)

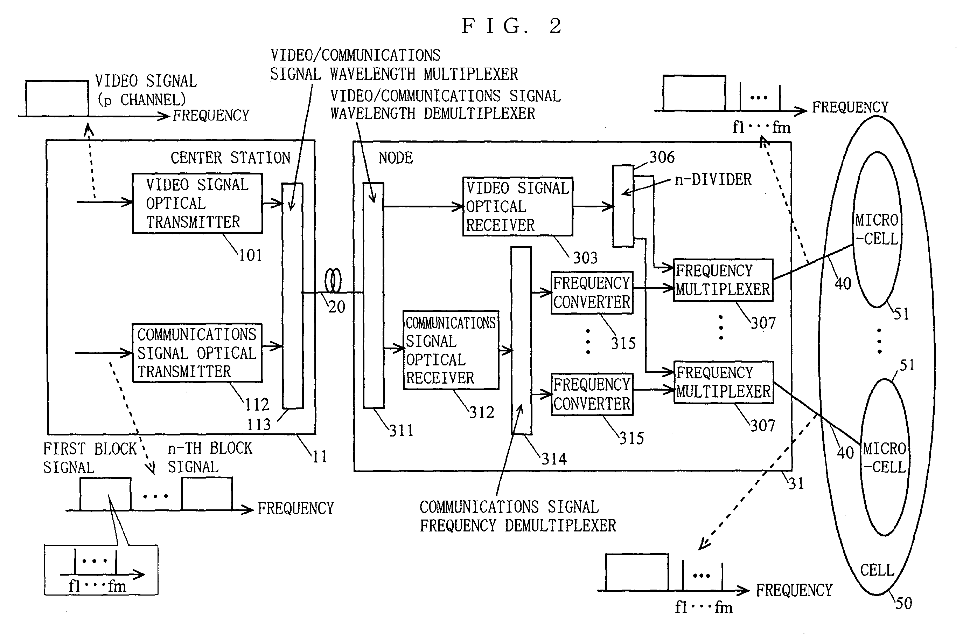

FIG. 2 is an illustration showing the configuration of an optical coaxial hybrid transmission system according to a second embodiment of the present invention. FIG. 2 also illustrates frequency spectra of a transmission signal observed at portions required for descriptions of the present embodiment. In FIG. 2, only a downstream system is illustrated, and an upstream system is omitted.

In FIG. 2, the optical coaxial hybrid transmission system includes a center station 11, the optical fiber 20, a node 31, and the cell 50. The center station 11, the node 31, and the micro-cells are connected to each other in a manner similar to that of the first embodiment. Components that are included in the center station 11 and the node 31 and are similar to those included in the center station 10 and the node 30 according to the first embodiment are provided with the same reference numerals, and are only briefly described.

The center station 11 includes a video signal optical transmitter 101, a communications signal optical transmitter 112, and a video/communications signal wavelength multiplexer 113. The node 31 includes a video/communications signal wavelength demultiplexer 311, a communications signal optical receiver 312, a communications signal frequency demultiplexer 314, n frequency converters 315, a video signal optical receiver 303, an n-divider 306, and n frequency multiplexers.

One end at the center station side of the optical fiber 20 is connected to the video/communications signal wavelength multiplexer 113. An input port of the video/communications signal wavelength multiplexer 113 is connected to the video signal optical transmitter 101 and the communications signal optical transmitter 112.

The other end at the node side of the optical fiber 20 is connected to the video/communications signal wavelength demultiplexer 311. An output port of the video/communications signal wavelength demultiplexer 311 is connected to the video signal optical receiver 303 and the communications signal optical receiver 312. An output port of the *n*-divider 306 is connected to the n frequency multiplexers 307. An output side of the communications signal optical receiver 312 is connected to the communications signal frequency demultiplexer 314. An output port of the communications signal frequency demultiplexer 314 is connected to *n* frequency converters 315. An output side of each frequency converters 315 is connected to the frequency multiplexer 307.

The micro-cells 51 are in a one-to-one correspondence with the frequency multiplexers 307 and the frequency converters 315. Frequency bands of communications signals supplied to the frequency converters 315 differ from each other. Each frequency band is determined based on the corresponding micro-cell 51.

Signals used in the second embodiment are described below. A *p*-channel video signal is similar to that in the first embodiment. A communications signal for use in each micro-cell 51 is an *m*-channel signal using a frequency band of f1 to fm (Hz), as with the first embodiment. By contrast, in the center station 11, communications signals for transmission to the respective micro-cells 51 are frequency-converted, and then frequency-multiplexed for transmission. That is, the communications signals for transmission to the respective micro-cells 51 are handled as (*m* x *n*)-channel signals. Here, the above frequency-converted communications signals for transmission to the respective micro-cells 51 are called block signals. Each block signal contains a communications signal for use in the corresponding micro-cell 51. Note that not all communications signals have to be frequency-converted. As illustrated in FIG. 2, a specific block signal may have a frequency between f1 and f*m* (Hz). FIG. 2 illustrates that first to *n* block signals are frequency-multiplexed in the center station 11. Note that FIG. 2 does not illustrate a component for frequency-multiplexing the first to *n* block signals.

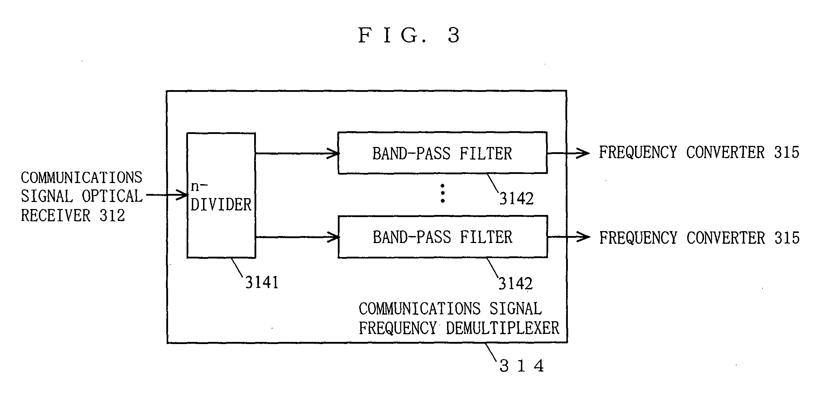

FIG. 3 is a block diagram illustrating an example of the structure of the communications signal frequency demultiplexer 314. In FIG. 3, the communications signal frequency demultiplexer 314 includes an *n*-divider 3141, and *n* band-pass filters 3142. The band-pass filters 3142 are connected to the respective frequency converters 315. An electrical signal from the communications signal optical receiver 312 is divided into *n* signals by the *n*-divider 3141. These signals are forwarded to the respective band-pass filters 3142. Each band-pass filter 3142 passes to the relevant frequency converters 315 only an electrical signal having a frequency that corresponds to that frequency converter 315.

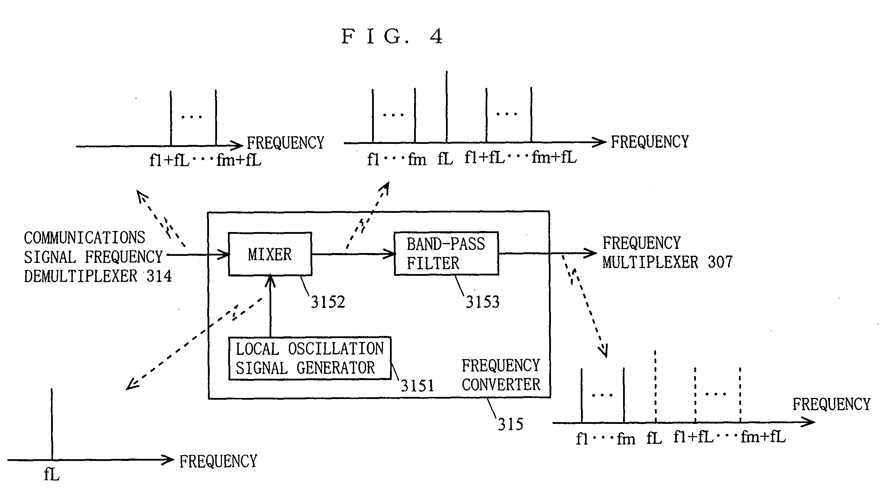

FIG. 4 is a block diagram illustrating an example of the structure of each frequency converter 315. In FIG. 4, the frequency converter 315 includes a local oscillation signal generator 3151, a mixer 3152, and a band-pass filter 3153. The local oscillation signal generator 3151 always generates a local oscillation signal having a frequency of fL (Hz) for output to the mixer 3152. Here, the frequency of the local oscillation signal differs for each frequency converter 315, and is determined based on the micro-cell 51 corresponding to the frequency converter 315.

The mixer 3152 mixes an electrical signal obtained by frequency-multiplexing signals having frequencies of (f1 + fL) to (fm + fL) (Hz) supplied by the communications signal frequency demultiplexer 314 and the local oscillation signal supplied by the local oscillation signal generator 3151 together for output to the band-pass filter 3153. The band-pass filter 3153 passes to the frequency multiplexer 307 only an electrical signal of f1 to fm (Hz).

The operation of the above-structured optical coaxial hybrid transmission system when a downstream signal is transmitted is now described below. The video signal supplied to the video signal optical transmitter 101 modulates an optical signal having a wavelength of λ*p*, and the resultant signal is then supplied to the video/communications signal wavelength multiplexer 113. The frequency-multiplexed (*m* × *n*) block signal supplied to the communications signal optical transmitter 112 modulates an optical signal having a wavelength of λ*m*, which is different from a wavelength of an optical signal output from the video signal optical transmitter 101. Then, the resultant signal is supplied to the video/communications signal wavelength multiplexer 113.

The video/communications signal wavelength multiplexer 113 wavelength-multiplexes the optical signal having the wavelength of λ*p* supplied by the video signal optical transmitter 101 and the optical signal having the wavelength of λ*m* supplied by the communications signal optical transmitter 112 for output. The wavelength-multiplexed optical signal output from the video/communications signal wavelength multiplexer 113 is supplied via the optical fiber 20 to the video/communications signal wavelength demultiplexer 311. The video/communications signal wavelength demultiplexer 311 demultiplexes the received optical signal into the optical signal having the wavelength of *λp* and the optical signal having the wavelength of λ*m*, and then supplies the optical signal having the wavelength of λ*p* to the video signal optical receiver 303 and the optical signal having the wavelength of λ*m* to the communications signal optical receiver 312.

The video signal optical receiver 303 and the *n*-divider 306 operate in a manner similar to that in the first embodiment, and outputs a video signal to the frequency multiplexers 307. The communications signal optical receiver 312 converts the optical signal having the wavelength of λ*m* into an electrical signal (frequency-multiplexed block signal) for output to the communications signal frequency demultiplexer 314. The communications signal frequency demultiplexer 314 frequency-demultiplexes the frequency-multiplexed block signal into block signals for output to the corresponding frequency converters 315.

Each frequency converter 315 converts the frequency of the block signal output from the communications signal frequency demultiplexer 314 into a frequency in a frequency band of f1 to f*m* (Hz), and then outputs the converted signal to the corresponding frequency multiplexer 307 as a communications signal. Each frequency multiplexer 307 frequency-multiplexes the video signal and the received communications signal in a manner similar to that of the first embodiment, and transmits the frequency-multiplexed signal via the coaxial cable 40 to the corresponding micro-cell 51.

As described above, in the optical coaxial hybrid transmission system according to the second embodiment, the center station 11 converts the frequency-multiplexed communications signals for transmission to the micro-cells 51 into block signals having different frequencies. Furthermore, the center station 11 wavelength-multiplexes the optical signal modulated with the frequency-multiplexed block signal and the optical signal modulated with the video signal for transmission. The node 31 frequency-multiplexes the video signal and the communications signal to the micro-cell for transmission to the respective micro-cells. Therefore, it is possible to provide an optical coaxial hybrid transmission system capable of quickly coping with high-speed Internet access and an increase in the number of subscribers at low cost by effectively using the existing system.

### (Third Embodiment)

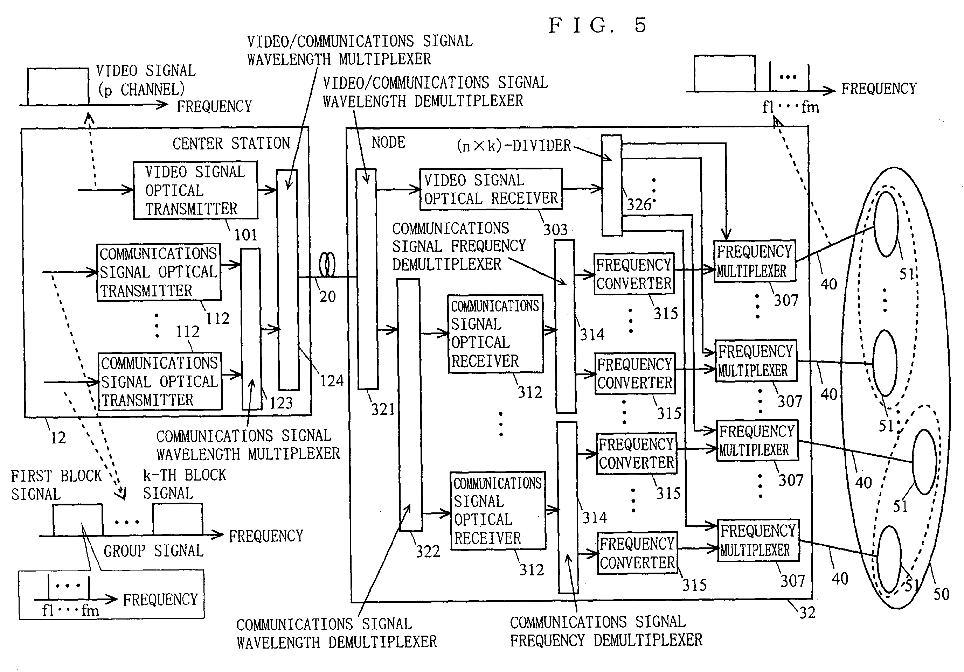

FIG. 5 is an illustration showing the configuration of an optical coaxial hybrid transmission system according to a third embodiment of the present invention. FIG. 5 also illustrates frequency spectra of a transmission signal observed at portions required for descriptions of the present embodiment. In FIG. 5, only a downstream system is illustrated, and an upstream system is omitted.

In FIG. 5, the optical coaxial hybrid transmission system includes a center station 12, the optical fiber 20, a node 32, and the cell 50. The center station 12, the node 32, and the cell 50 are connected to each other via the optical fiber 20 and the coaxial cables 40 in a manner similar to that of the first embodiment. Components which are included in the center station 12 and the node 32 and are similar to those included in the center stations 10 and 11 and the nodes 30 and 31 according to the first and second embodiments are provided with the same reference numerals, and are only briefly described. It is assumed herein that the cell 50 includes (n × k) micro-cells 51.

The center station 12 includes the video signal optical transmitter 101, *n* communications signal optical transmitters 112, a communications signal wavelength multiplexer 123, and a video/communications signal wavelength multiplexer 124. The node 31 includes a video/communications signal wavelength demultiplexer 321, a communications signal wavelength demultiplexer 322, *n* communications signal optical receivers 312, *n* communications signal frequency demultiplexers 314, (*n* × *k*) frequency converters 315, a video signal optical receiver 303, an (*n* × *k*)-divider 326, and (*n* × *k*) frequency multiplexers 307.

One end at the center station side of the optical fiber 20 is connected to the video/communications signal wavelength multiplexer 124. An input port of the video/communications signal wavelength multiplexer 124 is connected to the video signal optical transmitter 101 and the communications signal wavelength multiplexer 123. An input port of the communications signal wavelength multiplexer 123 is connected to the *n* communications signal optical transmitters 112.

One end of the node side of the optical fiber 20 is connected to the video/communications signal wavelength demultiplexer 321. An output port of the video/communications signal wavelength demultiplexer 321 is connected to the video signal optical receiver 303 and the communications signal wavelength demultiplexer 322. An output port of the communications signal wavelength demultiplexer 322 is connected to the *n* communications signal optical receivers 312.

An output side of the video signal optical receiver 303 is connected to the (*n* × *k*)-divider 326. An output port of the (*n* × *k*)-divider 326 is connected to the communications signal frequency demultiplexers 314. An output port of each communications signal frequency demultiplexer 314 is connected to *k* frequency converters 315. An output port of each frequency converter 315 is connected to the frequency multiplexer 307.

The micro-cells 51 are in a one-to-one correspondence with the frequency multiplexers 307 and the frequency converters 315. Frequency bands of the communications signals received by the frequency converters 315 differ from each other, and each frequency band is determined based on the corresponding micro-cell 51. Also, *k* micro-cells 51 composes a single group cell, and *n* group cells are included in the cell 50. The group cells are in a one-to-one correspondence with the communications signal frequency demultiplexers 314, the communications signal optical receivers 312, and the communications signal optical transmitters 112. The wavelengths of optical signals output from the communications signal optical transmitters 112 differ from each other, and each frequency band is determined based on the corresponding group cell included in the micro-cell 51.

Signals used in the third embodiment are described below. A *p*-channel video signal is similar to that used in the first embodiment. A communications signal for use in each micro-cell 51 is an *m*-channel signal using a frequency band of f1 to f*m* (Hz), as with the first embodiment. In the center station 12, *k* block signals described in the second embodiment are frequency-multiplexed for each group cell of the micro-cells 51, and the resultant signal is used as a communications signal (hereinafter referred to as a group signal: refer to FIG. 5).

The operation of the above-described optical coaxial hybrid transmission system is described below when a downstream signal is transmitted. A video signal supplied to the video signal optical transmitter 101 modulates an optical signal having a wavelength of λp for output to the video/communications signal wavelength multiplexer 124. A group signal obtained by frequency-multiplexing block signals supplied to each communications signal optical transmitter 112 modulates an optical signal having each different wavelength, and the resultant signal is then supplied to the communications signal wavelength multiplexer 123. Wavelengths of optical signals output from the communications signal optical transmitters 112 are different from the wavelength of λp of the optical signal output from the video signal optical transmitter 101.

The communications signal wavelength multiplexer 123 wavelength-multiplexes the optical signals output from the communications signal optical transmitters 112 for output to the video/communications signal wavelength multiplexer 124. The video/communications signal wavelength multiplexer 124 wavelength-multiplexes optical signals supplied from the video signal optical transmitter 101 and the communications signal wavelength multiplexer 123 for output.

A wavelength-multiplexed optical signal output from the video/communications signal wavelength multiplexer 124 is supplied via the optical fiber 20 to the video/communications signal wavelength demultiplexer 321. The video/communications signal wavelength demultiplexer 321 demultiplexes the received optical signal into an optical signal having the wavelength of λp and a communications optical signal, and supplies the optical signal having the wavelength of λp to the video signal optical receiver 303 and the communications optical signal to the communications signal wavelength demultiplexer 322. The communications signal wavelength demultiplexer 322 wavelength-demultiplexes the wavelength-multiplexed optical signal into optical signals for output to the corresponding communications signal optical receivers 312.

Each communications signal optical receiver 312 converts the received optical signal into an electrical signal for output to the corresponding communications signal frequency demultiplexer 314. Each communications signal frequency demultiplexer 314 frequency-demultiplexes the received electrical signal for each block signal for output to the corresponding frequency converter 315. Each frequency converter 315 converts the frequency of the received block signal into the frequency of f1 to fm (Hz), and forwards the resultant signal to the corresponding frequency multiplexer 307 as a communications signal.

The video signal optical receiver 303 and the (*n* × *k*)-divider 326 forward the video signal to (*n* × *k*) frequency multiplexers 307 in a manner similar to that in the first embodiment. Thereafter, as with the second embodiment, each frequency multiplexer 307 frequency-multiplexes the communications signal supplied by the frequency converter 315 and the video signal supplied by the (*n × k*)-divider 326 for output via the corresponding coaxial cable 40 to the corresponding micro-cell 51.

As described above, in the optical coaxial hybrid transmission system according to the third embodiment of the present embodiment, optical signals of different wavelengths are modulated with frequency-multiplexed block signals for transmission to the respective groups of the micro-cells 51, and then are wavelength-multiplexed. The resultant wavelength-multiplexed optical signals are further wavelength-multiplexed with an optical signal modulated by the video signal for transmission. Therefore, it is possible to provide an optical coaxial hybrid transmission system capable of quickly coping with high-speed Internet access and an increase in the number of subscribers at low cost by effectively using the existing system.

### (Fourth Embodiment)

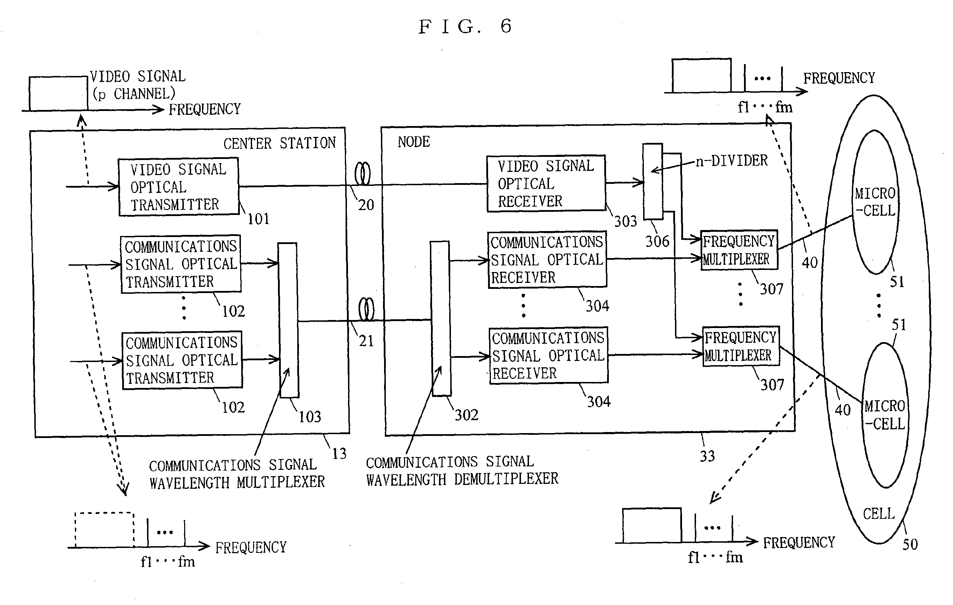

FIG. 6 is an illustration showing the configuration of an optical coaxial hybrid transmission system according to a fourth embodiment of the present invention. As with the first through third embodiments, FIG. 6 illustrates only a downstream system. In FIG. 6, components having functions similar to those in the first embodiment are provided with the same reference numerals, and are not described herein.

The optical coaxial hybrid transmission system includes a center station 13, the optical fiber 20, an optical fiber 21, a node 33, and the cell 50. The video signal optical transmitter 101 of the center station 13 and the video signal optical receiver 303 of the node 33 are connected to each other via the single optical fiber 20. Also, the communications signal wavelength multiplexer 103 of the center station 13 and the communications signal wavelength demultiplexer 302 of the node 33 are connected to each other via the optical fiber 21. That is, different optical fibers are used for video signal transmission and communications signal transmission.

In general, an optical fiber cable often used for installation is composed of a plurality of optical fibers. Therefore, an unused optical fiber of such optical fiber cable can be utilized for the above-described communications signal transmission. No new optical fiber has to be installed.

As described above, in the fourth embodiment, it is possible to provide an optical coaxial hybrid transmission system capable of quickly coping with high-speed Internet access and an increase in the number of subscribers at low cost by effectively using the existing system. Also, the optical signal modulated with the video signal and the optical signal modulated with the communications signal are not wavelength-multiplexed, but are transmitted via different optical fibers. Therefore, when the existing system is upgraded, the system design for the video signal does not have to be changed.

Note that the communications signal transmission system in the fourth embodiment is assumed to be similar in structure to that in the first embodiment, but can be similar in structure to that in the second or third embodiment.

### (Fifth Embodiment)

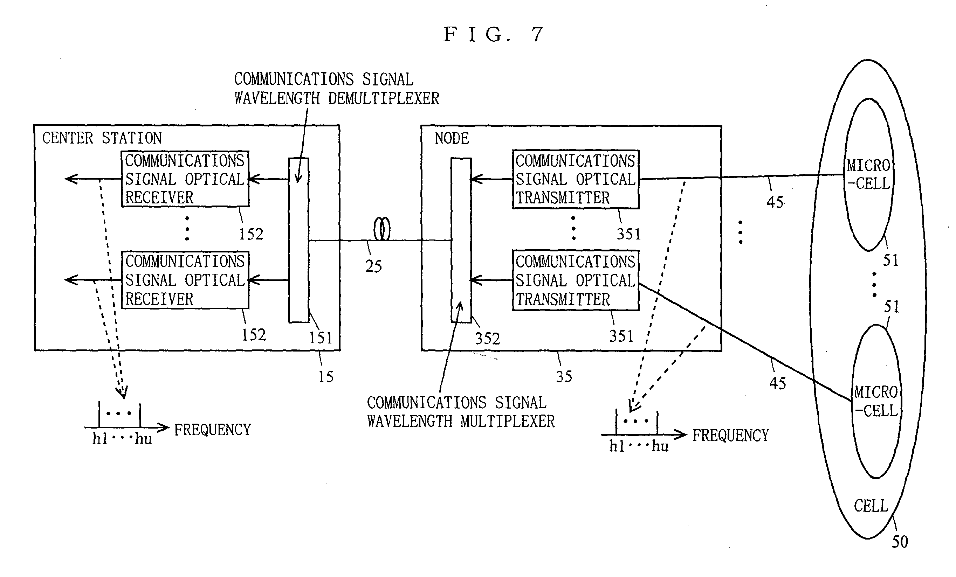

In a fifth embodiment, an optical coaxial hybrid transmission system for transmitting an upstream communications signal is described below. FIG. 7 is an illustration showing the optical coaxial hybrid transmission system according to the fifth embodiment of the present invention. FIG. 7 does not illustrate a downstream system. In FIG. 7, the optical coaxial hybrid transmission system includes a center station 15, an optical fiber 25, a node 35, and the cell 50.

Subscriber terminals (not shown) included in each micro-cell 51 includes a transmission signal output unit for transmitting a transmission signal that includes information unique to each subscriber terminal via a coaxial cable 45.

The node 35 includes *n* communications signal optical transmitters 351 and a communications signal wavelength multiplexer 352. The center station 15 includes *n* communications signal optical receivers 152 and a communications signal wavelength demultiplexer 151. The micro-cells 51 have a one-to-one correspondence with the communications signal optical transmitters 351 and the communications signal optical receivers 152.

The communications signal wavelength demultiplexer 151 and the communications signal wavelength multiplexer 352 are connected to each other via the optical fiber 25. An output port of the communications signal wavelength demultiplexer 151 is connected to the n communications signal optical receivers 152. An input port of the communications signal wavelength multiplexer 352 is connected to the *n* communications signal optical transmitters 351. Each communications signal optical transmitter 351 is connected via the coaxial cable 45 to the corresponding micro-cell 51 including the subscriber terminals.

For an upstream communications signal, a frequency in a band of h1 to h*u* (Hz) is used. The subscriber terminals included in each micro-cell 51 share these frequencies of h1 to hu (Hz).

The operation of the optical coaxial hybrid transmission system is described below when an upstream signal is transmitted. A communications signal transmitted from each micro-cell 51 via the corresponding coaxial cable 45 is converted into an optical signal by the corresponding communications signal optical transmitter 351, and is then supplied to the communications signal wavelength multiplexer 352. Wavelength of the optical signals output from the communications signal optical transmitters 351 differ from each other. The communications signal wavelength multiplexer 352 wavelength-multiplexes optical signals supplied by at least one communications signal optical transmitter 351 for output.

The wavelength-multiplexed optical signal output from the communications signal wavelength multiplexer 352 is supplied via the optical fiber 25 to the communications signal wavelength demultiplexer 151. The communications signal wavelength demultiplexer 151 wavelength-demultiplexes the wavelength-multiplexed optical signal into optical signals for output to the corresponding communications signal optical receivers 152. Each communications signal optical receiver 152 converts the received optical signal into an electrical signal (communications signal) for output.

As described above, it is possible to provide an optical coaxial hybrid transmission system capable of quickly coping with high-speed Internet access and an increase in the number of subscribers at low cost by effectively using the existing system.

### (Sixth Embodiment)

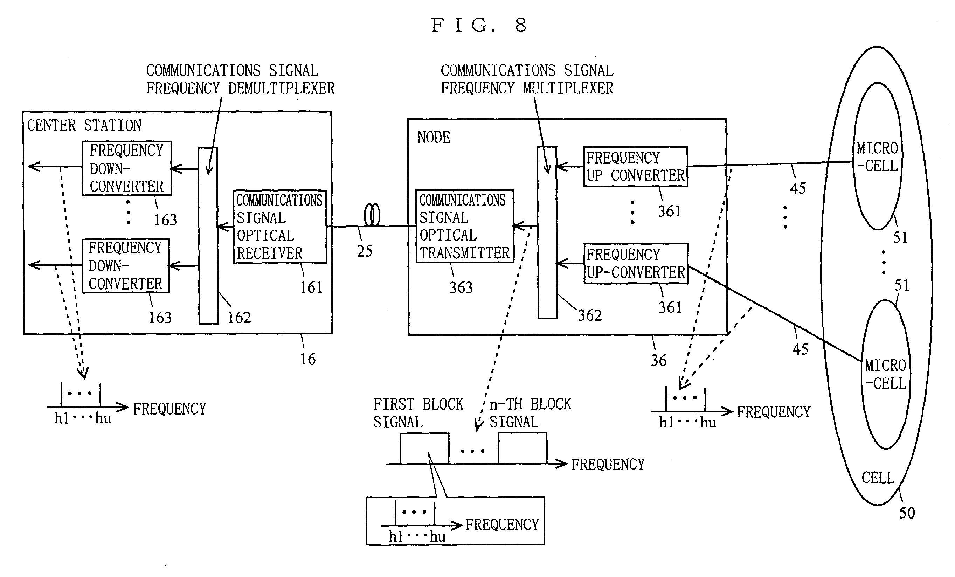

FIG. 8 is an illustration showing the configuration of an optical coaxial hybrid transmission system according to a sixth embodiment of the present invention. In FIG. 8, only an upstream system is illustrated, and a downstream system is omitted. In FIG. 8, the optical coaxial hybrid transmission system includes a center station 16, the optical fiber 25, a node 36, and the cell 50.

The node 36 includes *n* frequency up-converters 361 connected to the respective micro-cells 51, a communications signal frequency multiplexer 362, and a communications signal optical transmitter 363. The center station 15 includes a communications signal optical receiver 161, a communications signal frequency demultiplexer 162, and *n* frequency down-converters 163. The micro-cells 51 is in a one-to-one correspondence with the frequency up-converters 361 and the frequency down-converters 163.

The communications signal optical transmitter 363 and the communications signal optical receiver 161 are connected to each other via the optical fiber 25. An input side of the communications signal optical transmitter 363 is connected to the communications signal frequency multiplexer 362. An input port of the communications signal frequency multiplexer 362 is connected to the *n* frequency up-converters 361. An output side of the communications signal optical receiver 161 is connected to the communications signal frequency demultiplexer 162. An output port of the communications signal frequency demultiplexer 162 is connected to the *n* frequency down-converters 163.

For an upstream communications signal, as with the fifth embodiment, a frequency in a band of h1 to h*u* (Hz) is used.

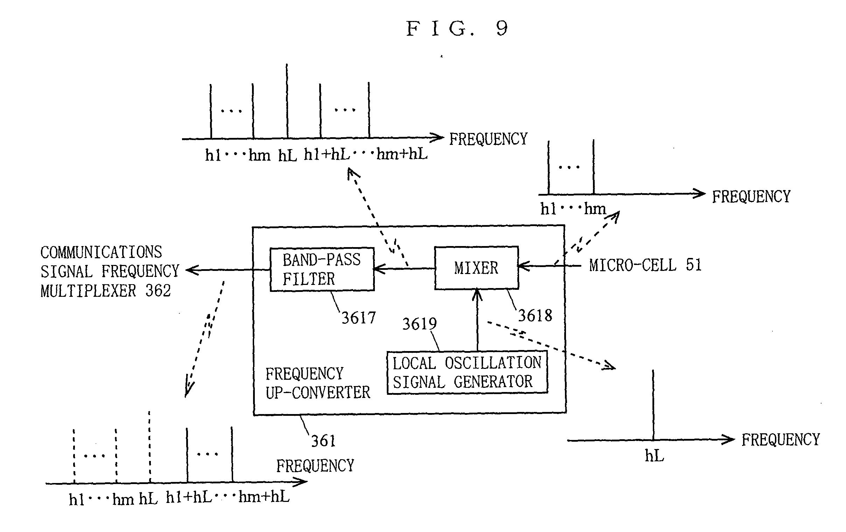

FIG. 9 is an illustration showing an example of the structure of each frequency up-converter 361. In FIG. 9, the frequency up-converter 361 includes a local oscillation signal generator 3619, a mixer 3618, and a band-pass filter 3617. The local oscillation signal generator 3619 generates a local oscillation signal having a frequency of hL (Hz) for output to the mixer 3618. The frequency of the local oscillation signal generated by the local oscillation signal generator 3619 differs depending on each frequency up-converter 361. The mixer 3618 mixes a frequency-multiplexed electrical signal having a frequency between h1 and hm (Hz) supplied by the corresponding micro-cell 51 and the local oscillation signal supplied by the local oscillation signal generator 3619, and then forwards the mixed signal to the band-pass filter 3617. Of the mixed electrical signal, the band-pass filter 3617 pass to the communications signal frequency multiplexer 362 only an electrical signal in a desired band of (h1 + hL) to (hm + hL) (Hz).

The operation of the optical coaxial hybrid transmission system is described below when an upstream signal is transmitted. A communications signal from one micro-cell 51 is up-converted in frequency by the corresponding frequency up-converter 361 for output to the communications signal frequency multiplexer 362. Note that frequencies obtained through up-conversion by the frequency up-converters 361 differ from each other. The communications signal frequency multiplexer 362 frequency-multiplexes communications signals output from at least one frequency up-converter 361 for output to the communications signal optical transmitter 363. The communications signal optical transmitter 363 modulates an optical signal with the frequency-multiplexed communications signal for output.

An optical signal output from the communications signal optical transmitter 363 is supplied via the optical fiber 25 to the communications signal optical receiver 161. The communications signal optical receiver 161 converts the received optical signal into an electrical signal for output to the communications signal frequency demultiplexer 162. The communications signal frequency demultiplexer 162 frequency-demultiplexes the received optical signal into optical signals for output to the corresponding frequency down-converters 163. Each frequency down-converter 163 down-converts the frequency of the received signal to h1 to h*u* (Hz) for output.

As described above, it is possible to provide an optical coaxial hybrid transmission system capable of quickly coping with high-speed Internet access and an increase in the number of subscribers at low cost by effectively using the existing system.

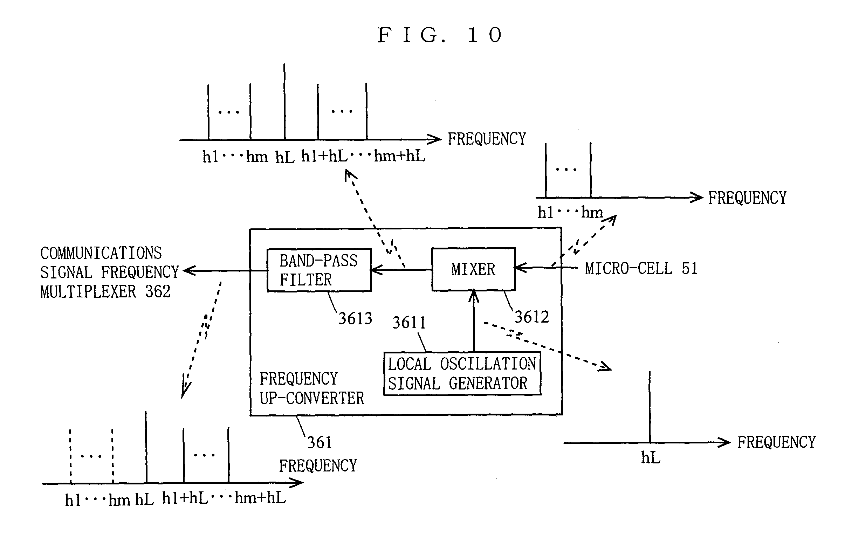

Note that the structure of each frequency up-converter 361 illustrated in FIG. 9 can be as follows. FIG. 10 is an illustration showing another example of the structure of each frequency up-converter 361. In FIG. 10, the frequency up-converter 361 includes a local oscillation signal generator 3611, a mixer 3612, and a band-pass filter 3613. The local oscillation signal generator 3611 generates a local oscillation signal having a frequency of hL (Hz) for output to the mixer 3612. The frequency of the local oscillation signal generated by the local oscillation signal generator 3611 differs depending on each frequency up-converter 361. The mixer 3612 mixes a frequency-multiplexed electrical signal in a band of h1 to h*m* (Hz) supplied by the corresponding micro-cell 51 with the local oscillation signal supplied by the local oscillation signal generator 3611 for output to the band-pass filter 3613. Of the mixed electrical signal, the band-pass filter 3613 passes to the corresponding communications signal frequency multiplexer 362 an electrical signal in a band of (h1 + hL) to (hm + hL) (Hz) and the local oscillation signal having the frequency of hL (Hz). Since the band-pass filter 3613 also passes the local oscillation signal, even when no upstream communications signal is transmitted from the corresponding micro-cell 51, at least the local oscillation signal is always forwarded to the corresponding communications signal frequency multiplexer 362. Therefore, a light source of the communications signal optical transmitter 363 is always modulated with the local oscillation signal.

As such, in the other example of the structure of the frequency up-converter 361 illustrated in FIG. 10, the band-pass filter 3613 of the frequency up-converter 361 has transmission characteristics of also passing a local oscillation signal. Therefore, the local oscillation signal is always supplied to the communications signal optical transmitter 363. With this, even when no upstream communications signal is output from the micro-cell 51, an optical signal modulated with the local oscillation signal is transmitted. Thus, compared with a case where the communications signal optical transmitter 363 is unmodulated, an optical spectrum is widened, and SBS in the fiber can be suppressed.

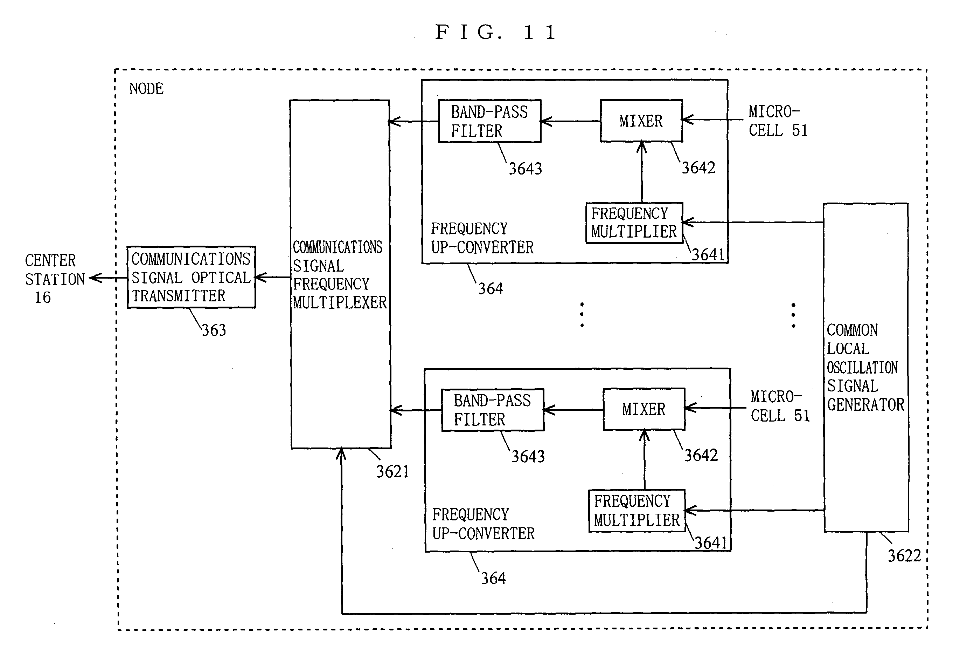

In the above descriptions, each frequency up-converter 361 illustrated in FIG. 10 is provided with a local oscillation signal generator. Alternatively, a local oscillation signal generator common to all frequency up-converters can be provided. FIG. 11 is an illustration showing the structure of a node in the optical coaxial hybrid transmission system when a common local oscillation signal is generated. In FIG. 11, the center station side and the cell side are omitted. Also, components similar in function to those illustrated in FIG. 8 are provided with the same reference numerals, and are not described herein.

The node includes a common local oscillation signal generator 3622, a communications signal frequency multiplexer 3621, and n frequency up-converters 364. Each frequency up-converter 364 includes a frequency multiplier 3641, a mixer 3642 and a band-pass filter 3643. The common local oscillation signal generator 3622 supplies a local oscillation signal to the frequency multiplier of each frequency up-converter 364 and the communications signal frequency multiplexer 3621.

The frequency multipliers 3641 are set with different amounts of multiplication. Each frequency multiplier 3641 converts the frequency of the received local oscillation signal by using its own set amount of multiplication for output to the mixer 3642. The mixer 3642 mixes the communications signal supplied by the corresponding micro-cell 51 and the frequency-converted local oscillation signal supplied by the frequency multiplier 3641 for output to the band-pass filter 3643. The band-pass filter 3643 passes to the communications signal frequency multiplexer 3621 a communications signal frequency-converted by the local oscillation signal. The communications signal frequency multiplexer 3621 frequency-multiplexes a communications signal transmitted from at least one frequency up-converter 364 and the local oscillation signal supplied by the common local oscillation signal generator 3622, and then forwards the resultant signal to the communications signal optical transmitter 363.

As described above, the communications signal frequency multiplexer 3621 is always supplied with the local oscillation signal from the common local oscillation signal generator 3622. Therefore, an optical signal modulated with the local oscillation signal is always supplied by the communications signal optical transmitter 363 to the optical fiber irrespectively of the presence or absence of an upstream communications signal. With this, influences of SBS occurring in the fiber can be avoided.

Also, the above local oscillation signal can be used at the center station 16 side for frequency down-conversion. With this, it is possible to solve a problem of a frequency difference between a local oscillation signal used in the center station and a local oscillation signal used in the node.

When an output power of the optical transmitter is below an SBS threshold value, the structure as illustrated in FIG. 10 or 11 is not necessarily required. That is, the structure in which the optical signal is always modulated with the local oscillation signal is not required.

### (Seventh Embodiment)

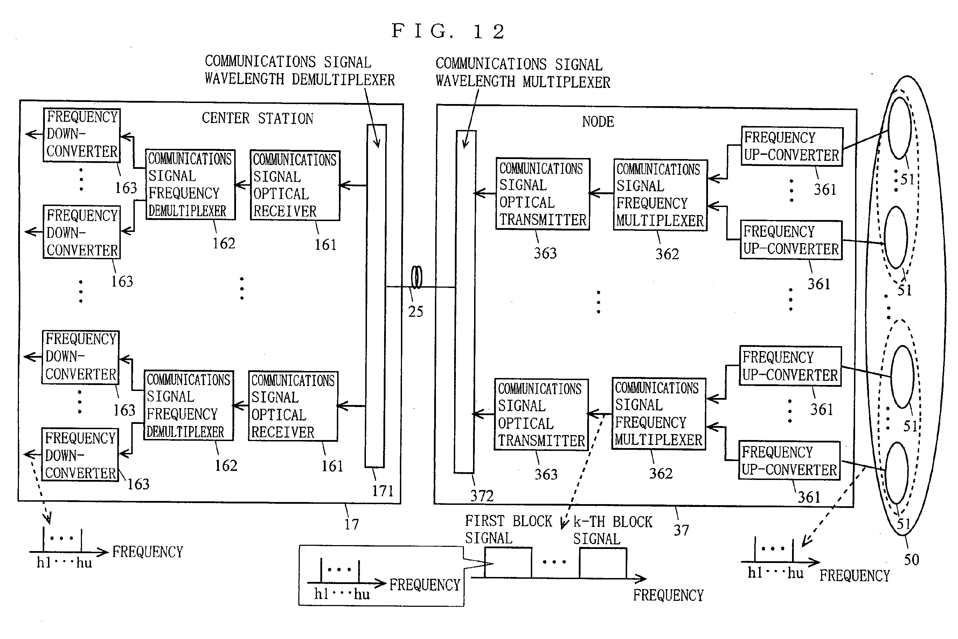

FIG. 12 is an illustration showing the configuration of an optical coaxial hybrid transmission system according to a seventh embodiment of the present invention. In FIG. 12, only an upstream system is illustrated, and a downstream system is omitted. In FIG. 12, the optical coaxial hybrid transmission system includes a center station 17, the optical fiber 25, a node 37, and the cell 50. In FIG. 12, components similar in function to those in the sixth embodiments are provided with the same reference numerals, and are only briefly described herein.

The node 37 includes a communications signal wavelength multiplexer 372. An input port of the communications signal wavelength multiplexer 372 is connected to n sets of the communications signal optical transmitter 363, the communications signal frequency multiplexer 362, and *k* frequency up-converters 361 as described in the sixth embodiment. The center station 17 includes a communications signal wavelength demultiplexer 171. An output port of the communications signal wavelength demultiplexer 171 is connected to n sets of the communications signal optical receiver 161, the communications signal frequency demultiplexer 162, and *k* frequency down-converters 361 as described in the sixth embodiment. Wavelengths of the optical signals output from the communications signal optical transmitters 363 are different from each other.

In the cell 50, *k* micro-cells 51 form a single group. Each group corresponds to each single piece of the communications signal frequency multiplexers 362, the communications signal optical transmitters 363, the communications signal optical receivers 161, and the communications signal frequency demultiplexers 162. For an upstream communications signal, as with the fifth embodiment, a frequency in a band of h1 to h*u* (Hz) is used.

The operation of the optical coaxial hybrid transmission system is described below when an upstream signal is transmitted. As with the sixth embodiment, communications signals output from the micro-cells 51 are frequency-converted by the corresponding frequency up-converters 361, and are then supplied to the corresponding communications signal frequency multiplexers 362 as first to *k*-th block signals. The communications signal frequency multiplexers 362 frequency-multiplexes the first to *k*-th block signals, and then outputs the resultant electrical signal to the corresponding communications signal optical transmitter 363. Each communications signal optical transmitter 363 modulates an optical signal with the received electrical signal for output to the communications signal wavelength multiplexer 372. Wavelengths of the optical signals output from the communications signal optical transmitters 363 are different from each other.

The optical signals output from at least one communications signal optical transmitter 363 is wavelength-multiplexed by the communications signal wavelength multiplexer 372 for output. An optical signal output from the communications signal wavelength multiplexer 372 is supplied via the optical fiber 25 to the communications signal wavelength demultiplexer 171. The communications signal wavelength demultiplexer 171 wavelength-demultiplexes the received optical signal into optical signals for output to the corresponding communications signal optical receivers 161. In a manner similar to that in the sixth embodiment, the optical signals supplied to the communications signal optical receivers 161 are converted into electrical signals, are frequency-demultiplexed by the communications signal frequency demultiplexers 162, and are then forwarded to the corresponding frequency down-converters 163, wherein the frequencies are converted into be in the range of h1 to h*u* (Hz).

As described above, it is possible to provide an optical coaxial hybrid transmission system capable of quickly coping with high-speed Internet access and an increase in the number of subscribers at low cost by effectively using the existing system.

As with the sixth embodiment and with the seventh embodiment, a frequency up-converter (refer to FIG. 10) capable of suppressing the occurrence of SBS can be used. Alternatively, a frequency up-converter and a communications signal frequency multiplexer using a common local oscillation signal generator (refer to FIG. 11) can be used. With these, it is possible to suppress the occurrence of SBS.

Furthermore, the communications signal optical transmitter can transmit not only communications signals associated with the Internet but also video signals (e.g., associated with VOD (Video On Demand)) differing from each other for each terminal.

While the invention has been described in detail, the foregoing description is in all aspects illustrative and not restrictive. It is understood that numerous other modifications and variations can be devised without departing from the scope of the invention.

## Claims

1. An optical coaxial hybrid transmission system comprising a center station (10), a node (30) connected to the center station via an optical fiber (20), and a plurality of groups of subscriber terminals (51) connected to the node via coaxial cables (40), wherein a first transmission signal including information common to all of the subscriber terminals and second transmission signals each including information unique to each of the subscriber terminals are transmitted from the center station to all of the subscriber terminals for each of micro-cells (51) indicative of each of the plurality of groups of subscriber terminals, wherein the node distributes a signal transmitted from the center station to each of the subscriber terminals included in each of the micro-cells, wherein
the center station includes:
a first electrical-optical converter (101) for converting the first transmission signal into an optical signal as a first optical signal;
a plurality of second electrical-optical converters (102) for multiplexing, for each of the micro-cells, the second transmission signals to be transmitted to the subscriber terminals to generate multiplexed electrical signals, and converting the multiplexed electrical signals into optical signals having different wavelengths corresponding to the micro-cells;
a first wavelength multiplexer (103) for wavelength-multiplexing the optical signals obtained by the plurality of second electrical-optical converters, and producing an output as a second optical signal; and
a second wavelength multiplexer (104) for wavelength-multiplexing the first optical signal and the second optical signal to generate an optical signal, and transmitting the optical signal via the optical fiber,
the node includes:
a first wavelength demultiplexer (301) for wavelength-demultiplexing the optical signal transmitted from the second wavelength multiplexer via the optical fiber into the first optical signal and the second optical signal;
a first optical-electrical converter (303) for converting the first optical signal obtained through demultiplexing by the first wavelength demultiplexer into the first transmission signal;
a second wavelength demultiplexer (302) for wavelength-demultiplexing the second optical signal obtained through demultiplexing by the first wavelength demultiplexer into a plurality of optical signals;
a plurality of second optical-electrical converters (304) for converting the plurality of optical signals obtained through demultiplexing by the second wavelength demultiplexer into electrical signals, and outputting the electrical signals as micro-cell-bound electrical signals; and
a plurality of frequency multiplexers (307), each provided for each of the second optical-electrical converters, for frequency-multiplexing the first transmission signal converted by the first optical-electrical converter and the micro-cell-bound electrical signal output from a corresponding one of the second optical-electrical converters to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the frequency multiplexers via the corresponding one of the coaxial cables, and further extracts the second transmission signal multiplexed on the micro-cell-bound electrical signal.

2. An optical coaxial hybrid transmission system comprising a center station (11), a node (31) connected to the center station via an optical fiber (20), and a plurality of groups of subscriber terminals (51) connected to the node via coaxial cables (40), wherein a first transmission signal including information common to all of the subscriber terminals and second transmission signals each including information unique to each of the subscriber terminals are transmitted from the center station to all of the subscriber terminals for each of micro-cells (51) indicative of each of the plurality of groups of subscriber terminals, wherein the node distributes a signal transmitted from the center station to each of the subscriber terminals included in each of the micro-cells, wherein
the center station includes:
a first electrical-optical converter (101) for converting the first transmission signal into an optical signal as a first optical signal;
a first frequency multiplexer for frequency-multiplexing a plurality of block signals corresponding to the micro-cells, the block signals being obtained by multiplexing, for each of the micro-cells, the second transmission signals to be transmitted to the subscriber terminals;
a second electrical-optical converter (112) for converting the block signals frequency-multiplexed by the first frequency multiplexer into an optical signal, and outputting the optical signal as a second optical signal; and
a wavelength multiplexer (113) for wavelength-multiplexing the first optical signal and the second optical signal to generate an optical signal for transmission via the optical fiber,
the node includes:
a wavelength demultiplexer (311) for demultiplexing the optical signal transmitted from the wavelength multiplexer via the optical fiber into the first optical signal and the second optical signal;
a first optical-electrical converter (303) for converting the first optical signal obtained by the wavelength demultiplexer into the first transmission signal;
a second optical-electrical converter (312) for converting the second optical signal obtained by the wavelength demultiplexer into an electrical signal;
a frequency demultiplexer (314) for frequency-demultiplexing the electrical signal obtained by the second optical-electrical converter into the plurality of block signals;
a plurality of frequency converters (315) each for frequency-converting a frequency of a corresponding one of the block signals obtained by the frequency demultiplexer into a frequency band receivable by a corresponding one of the groups of subscriber terminals included in a corresponding one of the micro-cells, and producing an output as a micro-cell-bound electrical signal; and
a plurality of second frequency multiplexers (307), each provided for each of the frequency converters, for frequency-multiplexing the first transmission signal obtained by the first optical-electrical converter and the micro-cell-bound electrical signal output from a corresponding one of the frequency converters to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the second frequency multiplexers via the corresponding one of the coaxial cables, and further extracts the second transmission signal multiplexed on the micro-cell-bound electrical signal.

3. An optical coaxial hybrid transmission system comprising a center station (12), a node (32) connected to the center station via an optical fiber (20), and a plurality of groups of subscriber terminals (51) connected to the node via coaxial cables (40), wherein a first transmission signal including information common to all of the subscriber terminals and second transmission signals each including information unique to each of the subscriber terminals are transmitted from the center station to all of the subscriber terminals for each of group cells which includes micro-cells (51) indicative of each of the plurality of groups of subscriber terminals, wherein the node distributes a signal transmitted from the center station to each of the subscriber terminals included in each of the micro-cells, wherein
the center station includes:
a first electrical-optical converter (101) for converting the first transmission signal into an optical signal as a first optical signal;
a plurality of second electrical-optical converters (112) for converting the group signals into a plurality of optical signals having different wavelengths corresponding to a plurality of group cells, wherein the second transmission signals are the group signals obtained correspondingly to the respective group cells for each of the group cells by frequency-multiplexing block signals obtained by multiplexing signals for each of the micro-cells;
a first wavelength multiplexer (123) for wavelength-multiplexing the optical signals obtained by the second electrical-optical converters, and producing an output as a second optical signal; and
a second wavelength multiplexer (124) for wavelength-multiplexing the first optical signal and the second optical signal to generate an optical signal, and transmitting the optical signal via the optical fiber,
the node includes:
a first wavelength demultiplexer (321) for demultiplexing the optical signal transmitted from the second wavelength multiplexer via the optical fiber into the first optical signal and the second optical signal;
a first optical-electrical converter (303) for converting the first optical signal obtained by the first wavelength demultiplexer into the first transmission signal;
a second wavelength demultiplexer (322) for wavelength-demultiplexing the second optical signal obtained by the first wavelength demultiplexer into a plurality of optical signals corresponding to the group cells;
a second optical-electrical converter (312) for converting the plurality of optical signals obtained by the second wavelength demultiplexer into the group signals;
a plurality of frequency demultiplexers (314), each provided for each of the second optical-electrical converters, for frequency-demultiplexing the group signals obtained by the second optical-electrical converter into the block signals;
a plurality of frequency converters (315), each provided for each of the frequency demultiplexers, for frequency-converting a frequency of one of the block signals obtained by a corresponding one of the frequency demultiplexers into a frequency band receivable by a corresponding one of the subscriber terminals included in a corresponding one of the micro-cells, and producing an output as a micro-cell-bound electrical signal; and
a plurality of frequency multiplexers (307), each provided for each of the frequency converters, for frequency-multiplexing the first transmission signal obtained by the first optical-electrical converter and the micro-cell-bound electrical signal output from the corresponding frequency converter to generate a frequency-multiplexed electrical signal, and transmitting the frequency-multiplexed electrical signal to a corresponding one of the groups of subscriber terminals included in the micro-cell via a corresponding one of the coaxial cables, and
each of the subscriber terminals receives the first transmission signal and the micro-cell-bound electrical signal multiplexed on the electrical signal transmitted from a corresponding one of the second frequency multiplexers via the corresponding one of the coaxial cables, and further extracts the second transmission signal multiplexed on the micro-cell-bound electrical signal.

4. An optical coaxial hybrid transmission system comprising a center station (13), a node (33) connected to the center station via first and second optical fibers (20, 21), and a plurality of groups of subscriber terminals (51) connected to the node via coaxial cables (40), wherein a first transmission signal including information common to all of the subscriber terminals and second transmission signals each including information unique to each of the subscriber terminals are transmitted from the center station to all of the subscriber terminals for each of micro-cells (51) indicative of each of the plurality of groups of subscriber terminals, wherein the node distributes a signal transmitted from the center station to each of the subscriber terminals included in each of the micro-cells, wherein
the center station includes:
a first electrical-optical converter (101) for converting the first transmission signal into an optical signal, and transmitting the optical signal as a first optical signal via the first optical fiber;
a plurality of second electrical-optical converters (102) for multiplexing, for each of the micro-cells, the second transmission signals transmitted to the subscriber terminals to generate multiplexed electrical signals, and converting the multiplexed electrical signals into optical signals having different wavelengths corresponding to the micro-cells; and
a wavelength multiplexer (103) for wavelength-multiplexing the optical signals obtained by the plurality of second electrical-optical converters, and producing an output as a second optical signal via the second optical fiber,
the node includes:
a first optical-electrical converter (303) for converting the first optical signal transmitted from the first electrical-optical converter via the first optical fiber into the first transmission signal;
a wavelength demultiplexer (302) for wavelength-demultiplexing the second optical signal transmitted from the wavelength multiplexer via the second optical fiber into a plurality of optical signals;
a plurality of second optical-electrical converters (304) for converting the optical signals obtained by the wavelength-demultiplexer into electrical signals, and outputting the electrical signals as micro-cell-bound electrical signals; and
a plurality of frequency multiplexer (307), each provided for each of the plurality of the second optical-electrical converters, for frequency-multiplexing the first transmission signal obtained by the first optical-electrical converter and the micro-cell-bound electrical signal output from a corresponding one of the second optical-electrical converters to generate a frequency-multiplexed electrical signal, and transmitting the frequency-multiplexed electrical signal to the subscriber terminals included in a corresponding one of the micro-cells via a corresponding one of the coaxial cables, wherein
each of the subscriber terminal receives the first transmission signal and the micro-cell-bound electrical signal multiplexed on the electrical signal transmitted from a corresponding one of the frequency multiplexers via the corresponding one of the coaxial cables, and further extracts the second transmission signal multiplexed on the micro-cell-bound electrical signal.

5. An optical coaxial hybrid transmission system comprising a center station (15), a node (35) connected to the center station via an optical fiber (25), and a plurality of groups of subscriber terminals (51) connected to the node via coaxial cables (45), wherein a transmission signal including information unique to each of the subscriber terminals is transmitted to the center station via the node for each of micro-cells (51) indicative of each of the plurality of groups of subscriber terminals, wherein
each of the subscriber terminals includes
a transmission signal output unit for transmitting the transmission signal including the information unique to the subscriber terminal via a corresponding one of the coaxial cables,
the node includes:
a plurality of electric-optical converters (351), each provided for each of the micro-cells, for receiving, for each of the micro-cells, the transmission signal transmitted from a corresponding one of the subscriber terminals via the corresponding one of the coaxial cables, and converting a plurality of said transmission signals into optical signals having different wavelengths corresponding to the micro-cells; and
a wavelength multiplexer (352) for wavelength-multiplexing the optical signals obtained by the electrical-optical converters to generate an optical signal, and transmitting the optical signal via the optical fiber, and
the center station includes:
a wavelength demultiplexer (151) for wavelength-demultiplexing the optical signal transmitted via the optical fiber into optical signals; and
a plurality of optical-electrical converters (152) for converting the optical signals obtained by the wavelength demultiplexer into electrical signals.

6. An optical coaxial hybrid transmission system comprising a center station (16), a node (36) connected to the center station via an optical fiber (25), and a plurality of groups of subscriber terminals (51) connected to the node via coaxial cables (45), wherein a transmission signal including information unique to each of the subscriber terminals is transmitted to the center station via the node for each of micro-cells (51) indicative of each of the plurality of groups of subscriber terminals, wherein
each of the subscriber terminals includes
a transmission signal output unit for transmitting the transmission signal including the information unique to the subscriber terminal via a corresponding one of the coaxial cables,
the node includes:
a plurality of first frequency converters (361), each provided correspondingly to the micro-cells, for receiving, for each of the micro-cells, the transmission signal transmitted from a corresponding one of the subscriber terminals via the corresponding one of the coaxial cables, and further converting a plurality of said transmission signals received for each of the micro-cells into block signals having different frequency bands corresponding to the micro-cells;
a frequency multiplexer (362) for frequency-multiplexing the block signals obtained by the first frequency converters to generate an electrical signal; and
an electrical-optical converter (363) for converting the electrical signal obtained by the frequency multiplexer into an optical signal, and transmitting the optical signal to the optical fiber, and
the center station includes:
an optical-electrical converter (161) for converting the optical signal transmitted via the optical fiber into an electrical signal;
a frequency demultiplexer (162) for frequency-demultiplexing the electrical signal obtained by the optical-electrical converter into the block signals; and
a plurality of second frequency converters (163) for converting frequency bands of the block signals obtained by the frequency demultiplexer into frequency bands of the transmission signals transmitted from the subscriber terminals.

7. An optical coaxial hybrid transmission system comprising a center station (17), a node (37) connected to the center station via an optical fiber (25), and a plurality of groups of subscriber terminals (51) connected to the node via coaxial cables, wherein a transmission signal including information unique to each of the subscriber terminals is transmitted to the center station via the node for each of group cells each including micro-cells (51) indicative of each of the plurality of groups of subscriber terminals, wherein
each of the subscriber terminals includes
a transmission signal output unit for transmitting the transmission signal including the information unique to the subscriber terminal via a corresponding one of the coaxial cables,
the node includes:
a plurality of first frequency converters (361), each provided correspondingly to each of the micro-cells, for receiving, for each of the micro-cells, the transmission signal transmitted from a corresponding one of the subscriber terminals via the corresponding one of the coaxial cables, and further converting a plurality of said transmission signals received for each of the micro-cells into block signals having different frequency bands corresponding to the micro-cells;
a plurality of frequency multiplexers (362), each provided correspondingly to each of the group cells, for frequency-multiplexing, for each of the group cells, the block signals obtained by the first frequency converters, and producing an output as a group signal;
a plurality of electrical-optical converters (363), each provided correspondingly to each of the frequency multiplexers, for converting a plurality of said group signals obtained by the frequency multiplexers into optical signals having wavelengths different from each other corresponding to the micro-cells; and
a wavelength multiplexer (372) for wavelength-multiplexing the optical signals obtained by the plurality of the electrical-optical converters to generate an optical signal, and transmitting the optical signal via the optical fiber, and
the center station includes:
a wavelength demultiplexer (171) for demultiplexing the optical signals transmitted via the optical fiber;
a plurality of optical-electrical converters (161), each provided correspondingly to each of the optical-electrical converters, for converting the group signal obtained by a corresponding one of the optical-electrical converter into the block signals; and
a plurality of second frequency converters (163), each provided correspondingly to each of the micro-cells, for converting a frequency band of the block signal obtained by a corresponding one of the frequency demultiplexers into a frequency band of the transmission signal transmitted from a corresponding one of the subscriber terminals.

8. The optical coaxial hybrid transmission system according to claim 6, wherein
each of the first frequency converters includes:
a local oscillation signal generator (3619) for outputting a local oscillation signal;
a mixer (3618) for mixing the local oscillation signal and a signal obtained by receiving the transmission signal outputted from each of the subscriber terminals for each of the micro cells; and
a band-pass filter (3617) for passing a signal of a predetermined frequency and a signal of a frequency band of the local oscillation signal from out of signals outputted from the mixer.

9. The optical coaxial hybrid transmission system according to claim 7, wherein
each of the first frequency converters includes:
a local oscillation signal generator (3619) for outputting a local oscillation signal;
a mixer (3618) for mixing the local oscillation signal and a signal obtained by receiving the transmission signal outputted from each of the subscriber terminals for each of the micro cells; and
a band-pass filter (3617) for passing a signal of a predetermined frequency and a signal of a frequency band of the local oscillation signal from out of signals outputted from the mixer.

10. The optical coaxial hybrid transmission system according to claim 6, wherein
the node further includes a local oscillation signal generator (3622) for generating a local oscillation signal,
each of the first frequency converters includes:
a third frequency converter (3641) converting the local oscillation signal output from the local oscillation signal generator;
a mixer (3642) for mixing a signal output from the third frequency converter and a signal obtained by receiving at least one transmission signal transmitted from the subscriber terminals for each micro-cell; and
a band-pass filter (3643) for passing a signal having a predetermined frequency band from out of signals output from the mixer, and
the frequency multiplexer frequency-multiplexes the local oscillation signal output from the local oscillation signal generator and a signal output from the band-pass filter.

11. The optical coaxial hybrid transmission system according to claim 7, wherein
the node further includes a local oscillation signal generator (3622) for generating a local oscillation signal,
each of the first frequency converters includes:
a third frequency converter (3641) converting the local oscillation signal output from the local oscillation signal generator;
a mixer (3642) for mixing a signal output from the third frequency converter and a signal obtained by receiving at least one transmission signal transmitted from the subscriber terminals for each micro-cell; and
a band-pass filter (3643) for passing a signal having a predetermined frequency band from out of signals output from the mixer, and
the frequency multiplexer frequency-multiplexes the local oscillation signal output from the local oscillation signal generator and a signal output from the band-pass filter.
